(19) Europäisches Patentamt
European Patent Office
Office européen des brevets

(11) **EP 4 585 806 A1**

(12) **EUROPÄISCHE PATENTANMELDUNG**

(43) Veröffentlichungstag:
 **16.07.2025  Patentblatt 2025/29**

(21) Anmeldenummer: **25150417.1**

(22) Anmeldetag: **07.01.2025**

(51) Internationale Patentklassifikation (IPC):
 *F04D 13/06* (2006.01)   *F04D 29/048* (2006.01)
 *F04D 29/08* (2006.01)   *F04D 29/62* (2006.01)
 *F04D 29/42* (2006.01)

(52) Gemeinsame Patentklassifikation (CPC):
 **F04D 29/628; F04D 13/0606; F04D 13/0633;
 F04D 29/048; F04D 29/086; F04D 29/426**

(84) Benannte Vertragsstaaten:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Benannte Erstreckungsstaaten:
 **BA**
 Benannte Validierungsstaaten:
 **GE KH MA MD TN**

(30) Priorität: **15.01.2024  EP 24151961**

(71) Anmelder: **Levitronix GmbH
 8048 Zürich (CH)**

(72) Erfinder:
 • **Steinert, Daniel
  8180 Bülach (CH)**
 • **Hu, Rennan
  8057 Zürich (CH)**
 • **Schmid, Alexander
  8915 Hausen am Albis (CH)**
 • **Barletta, Natale
  8048 Zürich (CH)**

(74) Vertreter: **IPS Irsch AG
 Langfeldstrasse 88
 8500 Frauenfeld (CH)**

(54) **PUMPENEINHEIT FÜR EINE ZENTRIFUGALPUMPE SOWIE ZENTRIFUGALPUMPE**

(57)  Es wird eine Pumpeneinheit für eine Zentrifugalpumpe vorgeschlagen, welche die Pumpeneinheit und einen Stator (100) umfasst, der sich in einer axialen Richtung (A) von einem ersten axialen Ende (110) bis zu einem zweiten axialen Ende (120) erstreckt, wobei an dem ersten axialen Ende (110) eine becherförmige Ausnehmung (121) vorgesehen ist, in welche die Pumpeneinheit (1) einsetzbar ist, wobei die Pumpeneinheit ein Pumpengehäuse (2) mit einem Einlass (21) und mit einem Auslass (22) für ein zu förderndes Fluid aufweist, sowie einen in dem Pumpengehäuse (2) angeordneten Rotor (10) zum Fördern des Fluids, der um die axiale Richtung (A) rotierbar ist, wobei die Pumpeneinheit für eine berührungslos magnetische Lagerung des Rotors (10) und für einen berührungslos magnetischen Antrieb des Rotors (10) durch den Stator (100) ausgestaltet ist, wobei das Pumpengehäuse (2) ein Deckelteil (4) und ein Bodenteil (3) zum Verschliessen des Deckelteils (4) aufweist, und wobei das Bodenteil (3) einen zylindrischen Becher (31) zur Aufnahme des Rotors (10) aufweist, welcher in die becherförmige Ausnehmung (121) des Stators (100) einsetzbar ist. Sowohl der Einlass (21) als auch der Auslass (22) des Pumpengehäuses (2) sind am Deckelteil angeordnet. Ferner wird eine Zentrifugalpumpe zum Fördern eines Fluids vorgeschlagen, die eine solche Pumpeneinheit umfasst.

Fig.3

**Beschreibung**

Die Erfindung betrifft eine Pumpeneinheit für eine Zentrifugalpumpe gemäss dem Oberbegriff des unabhängigen Patentanspruchs. Die Erfindung betrifft ferner eine Zentrifugalpumpe mit einer solchen Pumpeneinheit.

Es sind Zentrifugalpumpen bekannt, welche eine Pumpeneinheit und einen Stator umfassen, der als Antriebseinheit für den Rotor der Pumpeneinheit ausgestaltet ist, wobei der Rotor der Pumpeneinheit das Flügelrad der Zentrifugalpumpe bildet. Dabei ist der Rotor in der Pumpeneinheit mittels des Stators berührungslos magnetisch lagerbar und berührungslos zur Rotation um eine axiale Richtung antreibbar. Solche Zentrifugalpumpen werden beispielsweise von der Anmelderin unter der Produktbezeichnung Levitronix® BPS Pumpen vertrieben.

Der Stator und der Rotor bilden einen elektromagnetischen Drehantrieb. Bei den Levitronix® BPS Pumpen, beispielsweise, ist der elektromagnetische Drehantrieb nach dem Prinzip des lagerlosen Motors ausgestaltet. Mit dem Begriff lagerloser Motor ist dabei ein elektromagnetischer Drehantrieb gemeint, bei welchem der Rotor vollkommen magnetisch bezüglich des Stators lagerbar ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation um eine durch die axiale Richtung definierte Solldrehachse bewirkt, und welches zum anderen eine beliebig einstellbare Querkraft auf den Rotor ausübt, sodass dessen radiale Position aktiv steuerbar bzw. regelbar ist. Somit sind drei Freiheitsgrade des Rotors aktiv regelbar, nämlich seine Rotation sowie seine radiale Position (zwei Freiheitsgrade). Bezüglich dreier weiterer Freiheitsgrade, nämlich seiner Position in axialer Richtung und Verkippungen bezüglich der zur Solldrehachse senkrechten radialen Ebene (zwei Freiheitsgrade), ist der Rotor passiv magnetisch, das heisst nicht ansteuerbar, durch Reluktanzkräfte gelagert bzw. stabilisiert. Das Nichtvorhandensein eines separaten magnetischen Lagers bei vollständiger magnetischer Lagerung des Rotors ist die Eigenschaft, welcher der lagerlose Motor seinen Namen verdankt. In dem Lager- und Antriebsstator lässt sich die Lagerfunktion nicht von der Antriebsfunktion separieren.

Es sind natürlich auch andere Ausgestaltungen von Zentrifugalpumpen bekannt, bei welchen der Rotor berührungslos magnetisch gelagert ist, beispielsweise solche bei denen separate Magnetlager für den Rotor vorgesehen sind, sodass die magnetische Lagerfunktion von der Antriebsfunktion getrennt ist. Beispielsweise sind dazu separate Spulen vorgesehen, mit denen nur die Lagerkräfte für den Rotor realisiert werden, die aber keinen Beitrag zum Antrieb des Rotors leisten. Eine solche Zentrifugalpumpe ist beispielsweise in der WO 2022/004144 offenbart.

Zentrifugalpumpen mit berührungslos magnetisch gelagerten und angetriebenen Rotoren, beispielsweise solche, die nach dem Prinzip des lagerlosen Motors ausgestaltet und betrieben werden, haben sich in einer Vielzahl von Anwendungen bewährt. Aufgrund der Abwesenheit von mechanischen Lagern eignen sich solche Zentrifugalpumpen für Anwendungen, bei denen sehr empfindliche Substanzen gefördert werden, beispielsweise Blutpumpen, oder bei denen sehr hohe Anforderungen an die Reinheit gestellt werden, beispielsweise in der Halbleiterindustrie, der pharmazeutischen Industrie, der biotechnologischen Industrie, oder bei denen abrasive oder aggressive Substanzen gefördert werden, welche mechanische Lager sehr schnell zerstören würden, beispielsweise Pumpen für Slurry, Schwefel-, Phosphorsäure oder andere Chemikalien in der Halbleiterindustrie.

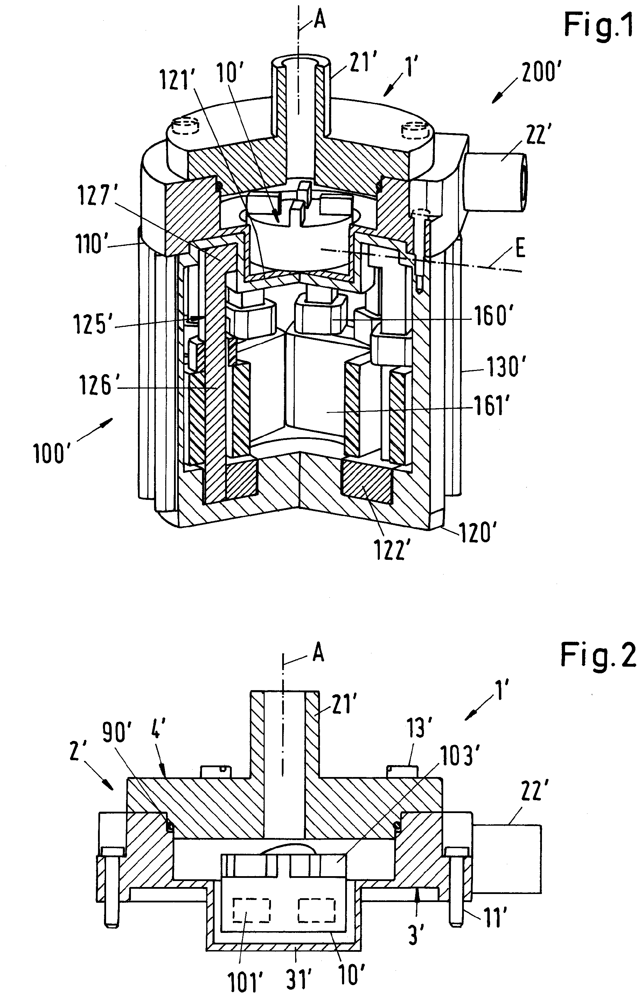

Fig. 1 zeigt eine Darstellung einer aus dem Stand der Technik bekannten Zentrifugalpumpe, die nach dem Prinzip des lagerlosen Motors ausgestaltet ist. Es handelt sich beispielsweise um eine Levitronix® BPS Pumpe. Zum besseren Verständnis ist in Fig. 1 ein Segment herausgeschnitten, damit das Innere der Zentrifugalpumpe sichtbar ist.

Um anzuzeigen, dass es sich bei der Darstellung in Fig. 1 und in Fig. 2 um eine Vorrichtung aus dem Stand der Technik handelt, sind hier die Bezugszeichen jeweils mit einem Hochkomma bzw. mit einem Strich versehen. Die Zentrifugalpumpe ist gesamthaft mit dem Bezugszeichen 200' bezeichnet.

Die Zentrifugalpumpe 200' umfasst einen Stator 100' und eine Pumpeneinheit 1'. Zum besseren Verständnis ist in Fig. 2 die Pumpeneinheit 1' in einer Schnittdarstellung gezeigt, wobei der Schnitt in axialer Richtung A erfolgt.

In der Pumpeneinheit 1' ist ein Rotor 10' angeordnet, welcher das Flügelrad bzw. das Laufrad bildet, mit dem das Fluid gefördert wird. Der Stator 100' hat ein Statorgehäuse 130' und erstreckt sich in einer axialen Richtung A von einem ersten axialen Ende 110' bis zu einem zweiten axialen Ende 120', wobei an dem ersten axialen Ende 110' eine becherförmige Ausnehmung 121' vorgesehen ist, in welche die Pumpeneinheit 1' einsetzbar ist. Der Stator 100' bildet mit dem Rotor 10' einen elektromagnetischen Drehantrieb zum Rotieren des Rotors 10' um die axiale Richtung A. Der Stator 100' ist zur berührungslosen magnetischen Lagerung des Rotors 10' nach dem Prinzip des lagerlosen Motors ausgestaltet. Hierzu ist der Stator 100' als Lager- und Antriebsstator ausgestaltet, mit welchem der Rotor 10' berührungslos magnetisch zur Rotation um die axiale Richtung A antreibbar und berührungslos magnetisch bezüglich des Stators 100' lagerbar ist, wobei der Rotor 10' bezüglich der axialen Richtung A passiv magnetisch stabilisiert ist, und in einer zur axialen Richtung A senkrechten radialen Ebene, die in Fig. 1 durch die Linie E angedeutet ist, aktiv magnetisch gelagert ist.

Der elektromagnetische Drehantrieb mit dem Stator 100' und dem Rotor 10' ist als sogenannter Tempelmotor ausgestaltet. Der Stator 100' umfasst eine Mehrzahl von Spulenkernen 125', hier acht Spulenkerne 125', von denen jeder einen Längsschenkel 126' umfasst, welcher sich von einem ersten Ende, in Fig. 1 das darstellungsgemäss untere Ende, in axialer Richtung A bis zu einem zweiten Ende erstreckt, sowie einen Querschenkel 127', welcher an dem zweiten Ende des Längsschenkels 126' und in der radialen Ebene E angeordnet ist. Jeder Querschenkel 127' erstreckt sich von dem zugehörigen Längsschenkel 126' in radialer Richtung auf den Rotor 10' zu und wird durch eine radial innenliegende Stirnfläche begrenzt. Die Spulenkerne 126' sind bezüglich der Umfangsrichtung um die becherförmige Ausnehmung 121' herum angeordnet und damit um den Rotor 10' herum, sodass der Rotor 10' zwischen den radial innenliegenden Stirnflächen der Querschenkel 127' der Spulenkerne 126' angeordnet ist.

Alle ersten Enden der Längsschenkel 126' sind durch einen Rückschluss 122' zur Führung des magnetischen Flusses miteinander verbunden. An jedem Längsschenkel 126' ist mindestens eine konzentrierte Wicklung 160', 161' vorgesehen, welche den jeweiligen Längsschenkel 126' umgibt. Bezüglich Anzahl und Anordnung der konzentrierten Wicklungen 160', 161' sind zahlreiche Varianten bekannt, die hier nicht näher erläutert werden. Es gibt beispielsweise solche Wicklungen 160', die um genau einen Längsschenkel 126' herum gewickelt sind, und solche Wicklungen 161', die um genau zwei Längsschenkel 126' herum angeordnet sind.

Die Mehrzahl der Längsschenkel 126', die sich in axialer Richtung A erstrecken und an die Säulen eines Tempels erinnern, hat dem Tempelmotor seinen Namen gegeben.

Die Pumpeneinheit 1' (Fig. 2) umfasst ein Pumpengehäuse 2' mit einem Einlass 21' und mit einem Auslass 22' für das zu fördernde Fluid, sowie den in dem Pumpengehäuse 2' angeordneten Rotor 10' zum Fördern des Fluids, der um die axiale Richtung A rotierbar ist. Der Rotor 10' umfasst einen magnetisch wirksamen Kern 101', welcher für die Drehmomentbildung sowie für die Erzeugung der magnetischen Lagerkräfte magnetisch mit dem Stator 100' zusammenwirkt. Der magnetisch wirksame Kern 101' ist beispielsweise ein permanentmagnetischer Ring oder eine permanentmagnetische Scheibe.

Es sind auch solche Ausgestaltungen möglich, bei denen der magnetisch wirksame Kern 101' permanentmagnetfrei, also ohne Permanentmagnete ausgestaltet ist. Der Rotor 10' ist dann z.B. als Reluktanzläufer ausgestaltet. Der magnetisch wirksame Kern 101 ' des Rotors 10' besteht dann beispielsweise aus einem weichmagnetischen Material. Geeignete weichmagnetische Materialien für den magnetisch wirksamen Kern 101 ' sind beispielsweise ferromagnetische oder ferrimagnetische Materialien, also insbesondere Eisen, Nickel-Eisen, Kobalt-Eisen, Silizium-Eisen, Mu-Metall.

Ferner sind Ausgestaltungen möglich, bei denen der magnetisch wirksame Kern 101 ' des Rotors 10' sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Typischerweise ist der magnetisch wirksame Kern 101' mit einem Kunststoff vollständig ummantelt. In anderen Ausführungsformen ist der magnetisch wirksame Kern 101 ' vollständig in einer Ummantelung eingeschlossen, die aus einem keramischen Material oder aus einem metallischen Material, beispielsweise einem rostfreien Stahl oder Titan oder Tantal, besteht.

Der Rotor 10' umfasst ferner eine Mehrzahl von Flügeln 103' zum Fördern des Fluids vom Einlass 21' zum Auslass 22'.

Das Pumpengehäuse 2' umfasst ein Bodenteil 3' und ein Deckelteil 4' zum Verschliessen des Bodenteils 3', wobei zwischen dem Bodenteil 3' und dem Deckelteil 4' ein Dichtungselement 90' vorgesehen ist, beispielsweise ein O-Ring oder eine Flachdichtung, um eine Leckage des Fluids in die Umgebung zu vermeiden.

Der Einlass 21' des Pumpengehäuses 2' ist in dem Deckelteil 4' angeordnet und so ausgestaltet, dass das zu fördernde Fluid den Rotor 10' in axialer Richtung A anströmt. Der Auslass 22' ist in dem Bodenteil 3' angeordnet und erstreckt sich parallel zur radialen Ebene E, also im Wesentlichen senkrecht zum Einlass 21'.

Das Bodenteil 3' des Pumpengehäuses 2' weist einen zylindrischen Becher 31' zur Aufnahme des Rotors 10' auf. Der Becher 31'wird in die Ausnehmung 121' im Statorgehäuse 130' eingesetzt, sodass der Rotor 10', genauer gesagt der magnetisch wirksame Kern 101' des Rotors 10' zwischen den Querschenkeln 127' der Spulenkerne 126' angeordnet ist.

Die Pumpeneinheit 1' ist beispielsweise mittels Befestigungselementen 11', z. B. einer Mehrzahl von Schrauben 11', am Statorgehäuse 130' befestigt. Die Schrauben 11' sind an dem Bodenteil 3' angeordnet und fixieren das Bodenteil 3' am ersten axialen Ende 110' des Stators 100'. Das Deckelteil 4' ist üblicherweise über einen Presssitz mit dem Bodenteil 3' verbunden. Zusätzlich wird das Deckelteil 4' mittels mehrerer Befestigungsschrauben 13' am Bodenteil 3' fixiert, welche in axialer Richtung A durch das Deckelteil 4' hindurchgreifen und in das Bodenteil 3' eingreifen.

Für viele Anwendungen, beispielsweise für Anwendungen in der Halbleiterindustrie, wird die Pumpeneinheit 1' - mit Ausnahme des magnetisch wirksamen Kerns 101' - aus einem Kunststoff gefertigt, beispielsweise aus einem Perfluoralkoxy-Polymer (PFA) oder aus Polytetrafluorethylen (PTFE), weil dies Kunststoffe mit einer besonders hohen chemischen Resistenz sind. Diese Kunststoffe sind praktisch inerte Stoffe, die auch von chemisch sehr aggressiven Substanzen, wie sie häufig in der Halbleiterindustrie zum Einsatz kommen, nicht angegriffen werden können. Zudem sind PFA und PTFE sehr reine Kunststoffe, weil sie üblicherweise keine Zusatzstoffe aufweisen und ihre Molekülkomplexe zumindest näherungsweise inert sind. PFA ist häufig bevorzugt, weil es in Spritzgiessverfahren verarbeitet werden kann.

Das Dichtungselement 90' zur Abdichtung zwischen dem Bodenteil 3' und dem Deckel 4' ist beispielsweise als O-Ring oder als ringförmige Flachdichtung ausgestaltet. Für das Dichtungselement 90' werden Elastomere bevorzugt, insbesondere auch deshalb, weil Elastomere sehr gute Rückstellkräfte aufweisen. In der Halbleiterindustrie, wo extrem hohe Anforderungen an die Reinheit gestellt werden, ist es auch üblich, Perfluorelastomere (Perfluorkautschuk, FFPM) für das Dichtungselement 90' zu verwenden. FFPM wird insbesondere dort eingesetzt, wo eine sehr gute thermische und/oder chemische Beständigkeit notwendig ist.

Trotz dieser sehr modernen und leistungsfähigen Materialien können insbesondere bei solchen Zentrifugalpumpen, die für sehr hohe Leistungen ausgelegt sind, beispielsweise mit einem elektrischen Drehantrieb, der für eine Leistung von mehr als 4kW ausgelegt ist, Probleme mit Leckagen auftreten.

Dies liegt unter anderem daran, dass die Zentrifugalpumpe bei solchen Anwendungen mit hohen Pumpleistungen sehr häufig in schwere Verrohrungssysteme integriert ist, welche erhebliche Kräfte auf den Einlass 21' und den Auslass 22' ausüben. Diese Kräfte können zu Verziehungen insbesondere im Pumpengehäuse und zu Kriechprozessen führen, welche Leckagen verursachen können. Ausserdem wird die Fertigung der Pumpeneinheit deutlich komplexer und aufwendiger, denn einerseits müssen die Komponenten des Pumpengehäuses 2' mechanisch ausreichend stabil sein und eine hohe Festigkeit aufweisen, um den enormen Kräften zu widerstehen, aber andererseits soll beispielsweise der Becher 31' im Bodenteil 3' des Pumpengehäuses 2' möglichst dünnwandig sein, um die magnetische Wechselwirkung zwischen dem Rotor 10' und dem Stator 100' in möglichst effizienter Weise zu ermöglichen. Diese gegensätzlichen Anforderungen lassen sich, wenn überhaupt, nur mit sehr komplexen und teuren Fertigungsprozessen erfüllen.

Ausgehend von diesem Stand der Technik ist es daher eine Aufgabe der Erfindung, eine Pumpeneinheit mit einem berührungslos magnetisch lagerbaren Rotor für eine Zentrifugalpumpe vorzuschlagen, die insbesondere bei hohen Leistungen eine erhöhte Betriebssicherheit, insbesondere gegenüber Leckagen, aufweist. Dabei soll die Pumpeneinheit möglichst einfach herstellbar sein. Zudem ist es eine Aufgabe der Erfindung, eine Zentrifugalpumpe mit einer solchen Pumpeneinheit vorzuschlagen.

Der diese Aufgabe lösende Gegenstand der Erfindung ist durch die Merkmale des unabhängigen Patentanspruchs gekennzeichnet.

Erfindungsgemäss wird also eine Pumpeneinheit für eine Zentrifugalpumpe vorgeschlagen, welche die Pumpeneinheit und einen Stator umfasst, der sich in einer axialen Richtung von einem ersten axialen Ende bis zu einem zweiten axialen Ende erstreckt, wobei an dem ersten axialen Ende eine becherförmige Ausnehmung vorgesehen ist, in welche die Pumpeneinheit einsetzbar ist, wobei die Pumpeneinheit ein Pumpengehäuse mit einem Einlass und mit einem Auslass für ein zu förderndes Fluid aufweist, sowie einen in dem Pumpengehäuse angeordneten Rotor zum Fördern des Fluids, der um die axiale Richtung rotierbar ist, wobei die Pumpeneinheit für eine berührungslos magnetische Lagerung des Rotors und für einen berührungslos magnetischen Antrieb des Rotors durch den Stator ausgestaltet ist, wobei das Pumpengehäuse ein Deckelteil und ein Bodenteil zum Verschliessen des Deckelteils aufweist, und wobei das Bodenteil einen zylindrischen Becher zur Aufnahme des Rotors aufweist, welcher in die becherförmige Ausnehmung des Stators einsetzbar ist. Sowohl der Einlass als auch der Auslass des Pumpengehäuses sind am Deckelteil angeordnet.

Dadurch, dass sowohl der Einlass als auch der Auslass des Pumpengehäuses am Deckelteil angeordnet sind, wird der Einfluss, der am Einlass und am Auslass angeschlossenen Verrohrungssysteme im Hinblick auf potentielle Leckagen erheblich reduziert, wodurch sich die Betriebssicherheit deutlich steigert. Da der Einlass und der Auslass am Deckelteil angeordnet sind, führen die mechanischen Kräfte, welche die dort angeschlossenen Leitungen bzw. Rohre auf das Pumpengehäuse ausüben, nicht mehr zu Relativbewegungen zwischen dem Deckelteil und dem Bodenteil, wie das der Fall sein kann, wenn beispielsweise der Einlass am Deckelteil und der Auslass am Bodenteil angeordnet ist. Mechanische Momente, wie Kipp-, Scher- oder Torsionsmomente, welche die Abdichtung zwischen dem Deckelteil und dem Bodenteil insbesondere mechanisch belasten, werden durch die erfindungsgemässe Anordnung deutlich reduziert, wodurch sich die Betriebssicherheit insbesondere im Hinblick auf Leckagen reduziert.

Ferner ist die erfindungsgemässe Pumpeneinheit auch deutlich einfacher von der Herstellung, weil das Deckelteil speziell auf eine hohe mechanische Stabilität und Festigkeit ausgelegt werden kann, während das Bodenteil als ein einfaches - beispielsweise drehsymmetrisches - Bauteil mit einem dünnwandigen zylindrischen Becher ausgestaltet werden kann. Es ist somit nicht mehr notwendig, eine Komponente, wie beispielsweise das Bodenteil, gleichzeitig mit einem möglichst dünnwandigen Becher und mit anderen Bereichen höherer Festigkeit herzustellen. Das ist fertigungstechnisch ein sehr grosser Vorteil.

Vorzugsweise ist das Bodenteil in das Deckelteil einsetzbar, sodass das Deckelteil radial aussenliegend das Bodenteil umfasst. Durch diese Ausgestaltung kann sich das Deckelteil nach dem Einsetzen der Pumpeneinheit in den Stator direkt auf dem Stator abstützen, das heisst, ohne dass diese Abstützung über das Bodenteil erfolgt. Diese direkte Abstützung des Deckelteils auf dem Stator bzw. dem Statorgehäuse hat insbesondere den Vorteil, dass die von schweren Zuleitungen am Einlass oder Abführungen am Auslass auf das Pumpengehäuse ausgeübten Kräfte viel besser in den Stator übertragen werden können und insbesondere die Abdichtung zwischen dem Deckelteil und dem Bodenteil - wenn überhaupt - nur noch in deutlich reduziertem Masse belasten.

Im Hinblick auf eine robuste Ausgestaltung und eine hohe Festigkeit des Deckelteils ist es bevorzugt, dass das Deckelteil aus einem metallischen Material, vorzugsweise aus einem Edelstahl, gefertigt ist. Dabei ist es besonders bevorzugt, wenn dieses metallische Material, also beispielsweise der Edelstahl oder der rostfreie Stahl, mit einem Kunststoff beschichtet oder bespritzt wird.

Für die innere Oberfläche des Deckelteils sind beispielsweise Polytetrafluorethylen (PTFE) oder ein Perfluoralkoxy-Polymer (PFA) geeignet. Diese Kunststoffe haben eine besonders hohe chemische Resistenz und sind daher insbesondere für Anwendungen in der Halbleiterindustrie geeignet. PTFE und PFA sind praktisch inerte Stoffe, die auch von chemisch sehr aggressiven Substanzen, wie sie häufig in der Halbleiterindustrie zum Einsatz kommen, nicht angegriffen werden können. Zudem sind PFA und PTFE sehr reine Kunststoffe, weil sie üblicherweise keine Zusatzstoffe aufweisen und ihre Molekülkomplexe zumindest näherungsweise inert sind, insbesondere, weil dies Kunststoffe mit einer besonders hohen chemischen Resistenz sind.

Die äussere Oberfläche des Deckelteils ist vorzugsweise mit einem Epoxidharz beschichtet.

Das Bodenteil mit dem zylindrischen Becher ist vorzugsweise als ein einfaches, rotationssymmetrisches Teil ausgestaltet. Das Bodenteil ist vorzugsweise aus einem Kunststoff gefertigt. Das Bodenteil kann beispielsweise aus PFA oder PTFE hergestellt werden. Das Bodenteil kann mittels eines spanabhebenden Verfahrens, z. B. mittels Fräsen, hergestellt werden oder in einem Spritzgiessverfahren, falls der Kunststoff spritzgiessbar ist, wie beispielsweise PFA.

Gemäss einer bevorzugten Ausgestaltung ist ein Montagering vorgesehen, auf welchem das Bodenteil aufliegt, wobei der Montagering an dem Deckelteil fixierbar ist, derart, dass das Bodenteil bezüglich der axialen Richtung zwischen dem Montagering und dem Deckelteil eingeklemmt ist. Diese Ausgestaltung hat den Vorteil, dass durch den Montagering das Deckelteil fest mit dem Bodenteil verbunden ist, sodass die Pumpeneinheit als Ganzes aus der becherförmigen Ausnehmung des Stators herausgenommen werden kann. Die Pumpeneinheit kann somit als Ganzes und in einfacher Weise vom Stator getrennt werden.

In einer bevorzugten Ausführungsform weist das Deckelteil eine Mehrzahl von Befestigungsöffnungen für Befestigungselemente auf, mit denen die Pumpeneinheit an dem Stator fixierbar ist, wobei die Befestigungsöffnungen radial aussenliegend an dem Deckelteil angeordnet sind. Die Befestigungselemente sind beispielsweise als Schrauben ausgestaltet, welche durch die Befestigungsöffnungen hindurchgreifen und in das erste axiale Ende des Stators eingreifen, sodass das Deckelteil - und damit auch die Pumpeneinheit - am Stator fixiert werden kann.

Besonders bevorzugt ist zwischen zwei in Umfangsrichtung benachbarten Befestigungsöffnungen eine radiale Ausnehmung vorgesehen, derart, dass ein Aussendurchmesser des Deckelteils an den Befestigungsöffnungen grösser ist als an der dazwischen angeordneten radialen Ausnehmung. Insbesondere, wenn das Deckelteil aus einem metallischen Material gefertigt ist, lassen sich mittels der radialen Ausnehmungen Wirbelstromverluste deutlich reduzieren. Solche Wirbelströme können durch die vom Stator generierten magnetischen Felder im Deckelteil induziert werden.

Ferner ist es bevorzugt, dass in axialer Richtung benachbart zu dem Deckelteil ein Abdeckring aus einem elektrisch schlecht leitenden Material vorgesehen ist, welcher so angeordnet ist, dass der Abdeckring nach dem Einsetzen der Pumpeneinheit in den Stator bezüglich der axialen Richtung zwischen den Befestigungsöffnungen und dem Stator angeordnet ist. Der Abdeckring ist vorzugsweise aus einem chemisch resistenten Kunststoff gefertigt, beispielsweise aus Polypropylen (PP). Der Abdeckring schützt den Stator. Zudem kann der Abdeckring bei solchen Ausgestaltungen, bei denen die radialen Ausnehmungen vorgesehen sind, so gestaltet werden, dass er diese radialen Ausnehmungen ausfüllt, wodurch sich die Stabilität erhöht.

Insbesondere, wenn das Deckelteil aus einem metallischen Material, beispielsweise auf einem rostfreien Stahl gefertigt ist, ist es eine bevorzugte Massnahme, dass auf der inneren Oberfläche des Deckelteils eine innere Auskleidung vorgesehen ist, welche aus einem Kunststoff gefertigt ist. Vorzugsweise besteht die innere Auskleidung aus einem chemisch sehr resistenten Kunststoff, der insbesondere resistent gegen aggressive Substanzen ist. Beispiele für solche Kunststoffe sind PTFE, PFA, ECTFE (Ethylenchlortrifluorethylen), ETFE (Ethylen-Tetrafluorethylen), oder PVDF (Polyvinylidenfluorid). Falls der Kunststoff spritzgiessbar ist, kann vorteilhafterweise das metallische Deckelteil als Teil der Spritzgiess-Form dienen. Alternativ ist es auch möglich, die innere Auskleidung herzustellen, indem mehrere Kunststoffteile in das metallische Deckelteil eingelegt werden, die dann zusammengeschweisst werden.

Um ein teilweises oder vollständiges Ablösen der inneren Auskleidung von dem Deckelteil noch wirkungsvoller zu verhindern, beispielsweise bei Anwendungen mit einem thermisch stark zyklischen Betrieb, ist es bevorzugt, dass auf der inneren Oberfläche des Deckelteils Ankerstrukturen vorgesehen sind, welche die Verbindung zwischen der inneren Auskleidung und der inneren Oberfläche verbessern. Diese Ankerstrukturen dienen der Verhakung der inneren Auskleidung in der inneren Oberfläche des Deckelteils. Die Ankerstrukturen können beispielsweise Kerben, Nuten, Grübchen (dimple) oder Vertiefungen sein, in denen sich die innere Auskleidung verankert. Insbesondere können die Ankerstrukturen mit Hinterschnitten ausgestaltet sein, was eine besonders starke Verhakung der inneren Auskleidung in den Deckelteil ermöglicht.

Bezüglich der Abdichtung zwischen dem Deckelteil und dem Bodenteil ist es eine bevorzugte Ausgestaltung, dass das Bodenteil eine im Wesentlichen ringförmige erste Dichtfläche aufweist, und das Deckelteil eine im Wesentlichen ringförmige zweite Dichtfläche zum Zusammenwirken mit der ersten Dichtfläche, wobei die erste Dichtfläche und die zweite Dichtfläche bezüglich der axialen Richtung überlappen, sodass eine radiale Dichtung herstellbar ist.

Gemäss einer bevorzugten Ausführungsform ist eine der beiden Dichtflächen als Rippenfläche mit mindestens einer radialen Dichtungsrippe ausgestaltet ist, die sich in Umfangsrichtung entlang der gesamten Dichtfläche erstreckt, während die andere der beiden Dichtflächen als glatte Fläche ausgestaltet ist. Durch diese Ausgestaltung ist es möglich, auf ein separates Dichtungselement zwischen dem Bodenteil und dem Deckelteil zu verzichten, welches während des normalen, also störungsfreien Betriebs mit dem Fluid in Kontakt käme. Im normalen, das heisst störungsfreien Betrieb kommt also das zu fördernde Fluid mit keinem

separaten Dichtungselement in Berührung, sodass auch keine Gefahr der Verunreinigung des Fluids durch ein solches separates Dichtungselement besteht.

Der Verzicht auf ein solches separates Dichtungselement stellt eine deutliche Verbesserung im Hinblick auf die Reinheit des zu fördernden Fluids dar. Da das Fluid im normalen Betriebszustand nicht mit einem solchen separaten Dichtungselement in Kontakt kommen kann, besteht auch keine Gefahr, dass das Fluid durch ein solches separates Dichtungselement verunreinigt wird, beispielsweise durch das Austreten von Zusatzstoffen aus dem Dichtungselement, wie es beispielsweise bei Elastomer Dichtungen vorkommen kann.

Vorzugsweise sind in der als Rippenfläche ausgestalteten ersten oder zweiten Dichtfläche mehrere Dichtungsrippen vorgesehen, von denen sich jede vollständig entlang des gesamten Umfangs der Rippenfläche erstreckt. Jede dieser Dichtungsrippen liegt an der als glatte Fläche ausgestalteten zweiten oder ersten Dichtfläche an. Das heisst, jede Dichtungsrippe ist in unmittelbarem körperlichem Kontakt mit der als glatte Fläche ausgestalteten Dichtfläche. Mit dem Begriff "glatte Fläche" ist insbesondere gemeint, dass diese Dichtfläche keine Nuten oder sonstige Ausnehmungen aufweist, in welche die Dichtungsrippen eingreifen können. Die Dichtungsrippen liegen also auf dieser unstrukturierten glatten Fläche auf.

Es sind Ausgestaltungen möglich, bei denen die erste Dichtfläche als die Rippenfläche ausgestaltet ist und die zweite Dichtfläche als die glatte Fläche, das heisst die Dichtungsrippen sind dann an dem Bodenteil vorgesehen, und die zweite Dichtfläche, also die des Deckelteils, ist unstrukturiert als glatte Dichtfläche ausgestaltet.

Ferner sind Ausgestaltungen möglich, bei denen die zweite Dichtfläche als die Rippenfläche ausgestaltet ist und die erste Dichtfläche als die glatte Fläche, das heisst die Dichtungsrippen sind dann an dem Deckelteil vorgesehen, und die erste Dichtfläche, also die des Bodenteils, ist unstrukturiert als glatte Dichtfläche ausgestaltet.

Insbesondere bei der Ausgestaltung mit der oder den radialen Dichtungsrippe(n) ist es bevorzugt, dass ein radiales Verstärkungselement vorgesehen ist, welches ringförmig ausgestaltet ist, und radial innenliegend bezüglich der beiden Dichtflächen angeordnet ist. Das radiale Verstärkungselement, welches radial innenliegend konzentrisch mit den beiden Dichtflächen angeordnet ist, stabilisiert die erste und die zweite Dichtfläche und ist daher vorteilhaft im Hinblick auf die Verhinderung von Deformationen der Dichtflächen oder Relativbewegungen der beiden Dichtflächen zueinander. Hierdurch ist es in noch höherem Masse gewährleistet, dass sich zwischen den beiden Dichtflächen auch bei höherem Druck im Pumpengehäuse keine Spalte oder sonstige Leckagepfade öffnen. Zudem ist das radiale Verstärkungselement vorteilhaft, um insbesondere auch ein Kriechen des Bodenteils oder des Deckelteils weiter zu reduzieren oder sogar ganz zu verhindern, insbesondere dann, wenn das Bodenteil aus einem zum Kriechen neigenden Kunststoff besteht, beispielsweise aus PFA oder PTFE.

Fertigungstechnisch ist es eine bevorzugte Massnahme, dass das radiale Verstärkungselement einstückig mit dem Montagering ausgestaltet ist.

Durch die Erfindung wird ferner eine Zentrifugalpumpe zum Fördern eines Fluids vorgeschlagen mit einer erfindungsgemäss ausgestalteten Pumpeneinheit, und mit einem Stator, der sich in einer axialen Richtung von einem ersten axialen Ende bis zu einem zweiten axialen Ende erstreckt, wobei an dem ersten axialen Ende eine becherförmige Ausnehmung vorgesehen ist, in welche der zylindrischen Becher der Pumpeneinheit einsetzbar ist, wobei der Stator mit dem Rotor einen elektromagnetischen Drehantrieb zum Rotieren des Rotors um die axiale Richtung bildet, wobei der Stator als Lager- und Antriebsstator ausgestaltet ist, mit welchem der Rotor berührungslos magnetisch antreibbar und berührungslos magnetisch bezüglich des Stators lagerbar ist, wobei der Rotor bezüglich der axialen Richtung passiv magnetisch stabilisiert ist, und in einer zur axialen Richtung senkrechten radialen Ebene aktiv magnetisch gelagert ist.

Besonders bevorzugt ist der elektromagnetische Drehantrieb als Tempelmotor ausgestaltet ist, wobei der Stator eine Mehrzahl von Spulenkernen aufweist, von denen jeder einen Längsschenkel umfasst, welcher sich von einem ersten Ende in axialer Richtung bis zu einem zweiten Ende erstreckt, sowie einen Querschenkel, welcher an dem zweiten Ende des Längsschenkels und in der radialen Ebene angeordnet ist, und welcher sich von dem Längsschenkel in radialer Richtung erstreckt, wobei die Spulenkerne bezüglich der Umfangsrichtung um den Rotor herum angeordnet sind, sodass der Rotor zwischen den Querschenkeln der Spulenkerne angeordnet ist, und wobei an jedem Längsschenkel mindestens eine konzentrierte Wicklung vorgesehen ist, welche den jeweiligen Längsschenkel umgibt.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen (teilweise im Schnitt):

Fig. 1: eine perspektivische Darstellung einer Zentrifugalpumpe gemäss Stand der Technik, teilweise im Schnitt,

Fig. 2: eine Schnittdarstellung der Pumpeneinheit der Zentrifugalpumpe aus Fig. 1,

Fig. 3: eine perspektivische Explosionsdarstellung eines ersten Ausführungsbeispiels einer erfindungsgemässen Pumpeneinheit,

Fig. 4: eine Schnittdarstellung des ersten Ausführungsbeispiels aus Fig. 3,

Fig. 5: eine perspektivische Explosionsdarstellung eines zweiten Ausführungsbeispiels einer erfindungsgemässen Pumpeneinheit,

Fig. 6: eine Schnittdarstellung des zweiten Ausführungsbeispiels aus Fig. 5,

Fig. 7: eine Schnittdarstellung eines dritten Ausführungsbeispiels einer erfindungsgemässen Pumpeneinheit in einer Explosionsdarstellung,

Fig. 8: eine Schnittdarstellung des dritten Ausführungsbeispiels aus Fig. 7 im zusammengesetzten Zustand,

Fig. 9: eine perspektivische Darstellung des Deckelteils des dritten Ausführungsbeispiels,

Fig. 10: wie Fig. 9, jedoch für eine Variante des Deckelteils,

Fig. 11: eine perspektivische Explosionsdarstellung eines vierten Ausführungsbeispiels einer erfindungsgemässen Pumpeneinheit,

Fig. 12: eine perspektivische Darstellung des vierten Ausführungsbeispiels aus Fig. 11 zusammen mit einem Stator,

Fig. 13: eine Schnittdarstellung eines fünften Ausführungsbeispiels einer erfindungsgemässen Pumpeneinheit,

Fig. 14: eine Schnittdarstellung eines sechsten Ausführungsbeispiels einer erfindungsgemässen Pumpeneinheit,

Fig. 14a: das Detail I aus Fig. 14,

Fig. 15: wie Fig. 4, jedoch mit Erläuterungen von Abmessungen, und

Fig. 16: eine schematische Schnittdarstellung eines Ausführungsbeispiels einer erfindungsgemässen Zentrifugalpumpe.

Wie bereits vorangehend erläutert, zeigt Fig. 1 eine Zentrifugalpumpe 200' mit einem berührungslos magnetisch gelagerten und berührungslos magnetisch angetriebenen Rotor 10', die aus dem Stand der Technik bekannt ist. Fig. 2 zeigt in einer Schnittdarstellung die Pumpeneinheit 1' dieser Zentrifugalpumpe 200'.

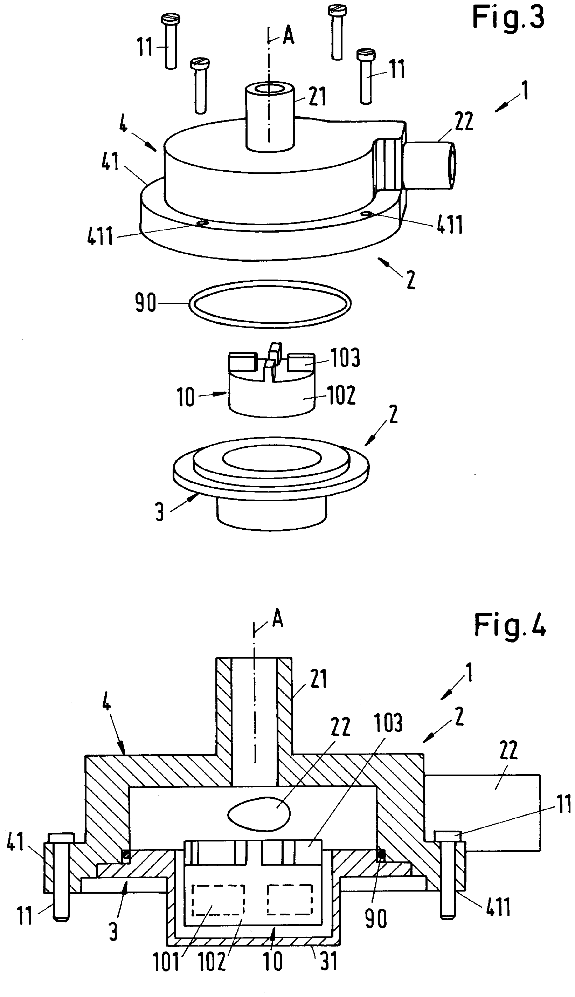

Fig. 3 zeigt in einer perspektivischen Explosionsdarstellung ein erstes Ausführungsbeispiels einer erfindungsgemässen Pumpeneinheit, die gesamthaft mit dem Bezugszeichen 1 bezeichnet ist. Zum besseren Verständnis zeigt Fig. 4 das erste Ausführungsbeispiel der Pumpeneinheit 1 noch in einer zu Fig. 2 analogen Schnittdarstellung.

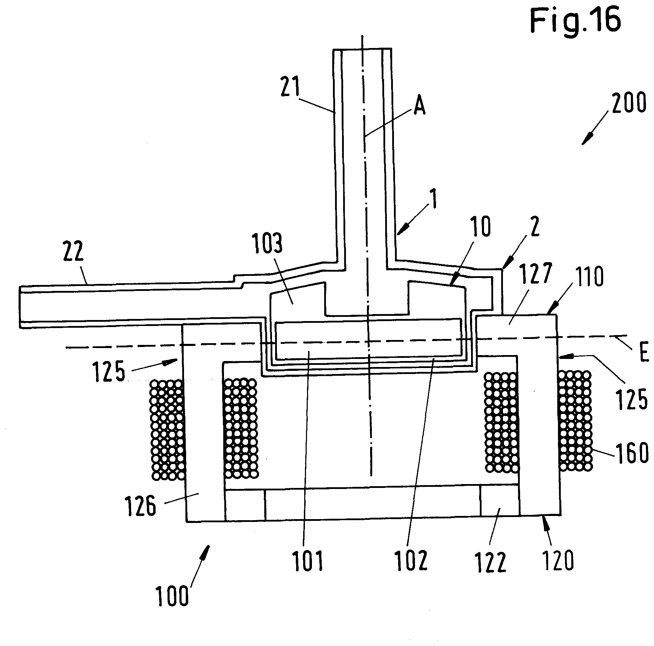

Die Pumpeneinheit 1 ist für eine Zentrifugalpumpe 200 (siehe Fig. 16) zum Fördern eines Fluids ausgestaltet und umfasst ein Pumpengehäuse 2 mit einem Einlass 21 und mit einem Auslass 22 für das Fluid. In dem Pumpengehäuse 2 ist ein Rotor 10 zum Fördern des Fluids angeordnet, welcher das Flügelrad bzw. das Laufrad der Pumpeneinheit 1 und damit der Zentrifugalpumpe 200 bildet. Der Rotor 10 ist um eine Solldrehachse rotierbar, welche eine axiale Richtung A definiert.

Eine zur axialen Richtung A senkrechte Richtung wird als radiale Richtung bezeichnet. Im Folgenden wird der Ausdruck "axial" mit der allgemein üblichen Bedeutung "in axialer Richtung" oder "bezüglich der axialen Richtung" verwendet. Der Begriff "radial" wird mit der allgemein üblichen Bedeutung "in radialer Richtung" oder "bezüglich der axialen Richtung" verwendet

Die Pumpeneinheit 1 ist für eine berührungslos magnetische Lagerung des Rotors 10 und für einen berührungslos magnetischen Antrieb des Rotors 10 ausgestaltet. Dies kann insbesondere in sinngemäss gleicher Weise realisiert sein, wie dies anhand der Fig. 1 und Fig. 2 erläutert ist. So kann die erfindungsgemässe Pumpeneinheit 1 bezüglich der magnetischen Lagerung und des magnetischen Antriebs in sinngemäss gleicher Weise ausgestaltet sein wie die Pumpeneinheit 1' in Fig. 2. Dazu umfasst der Rotor 10 der Pumpeneinheit 1 einen magnetisch wirksamen Kern 101, der beispielsweise als permanentmagnetische Ring oder permanentmagnetische Scheibe ausgestaltet ist, und von einer Kunststoffummantelung 102 umschlossen wird. Die Kunststoffummantelung 102 besteht beispielsweise aus PTFE oder PFA.

Der Rotor 10 umfasst ferner eine Mehrzahl von Flügeln 103, um das Fluid vom Einlass 21 zum Auslass 22 zu fördern. Die Flügel 103 sind auf der Kunststoffummantelung 102 des magnetisch wirksamen Kerns 101 angeordnet. Die Flügel 103 bestehen vorzugsweise aus Kunststoff und können beispielsweise einstückig mit der Kunststoffummantelung 102 ausgestaltet sein. Natürlich ist es auch möglich, die individuellen Flügel 103 oder die Gesamtheit der Flügel 103 in einem separaten Fertigungsprozess herzustellen und sie dann mit der Kunststoffummantelung 102 des magnetisch wirksamen Kerns 101 zu verbinden, beispielsweise mittels eines Schweissprozesses.

Das von dem Rotor 10 gebildete Laufrad mit den Flügeln 103 ist vorzugsweise als radiales Laufrad ausgestaltet, welches von dem Fluid vom Einlass 21 in axialer Richtung A angeströmt wird, und das Fluid dann in eine radiale Richtung umlenkt.

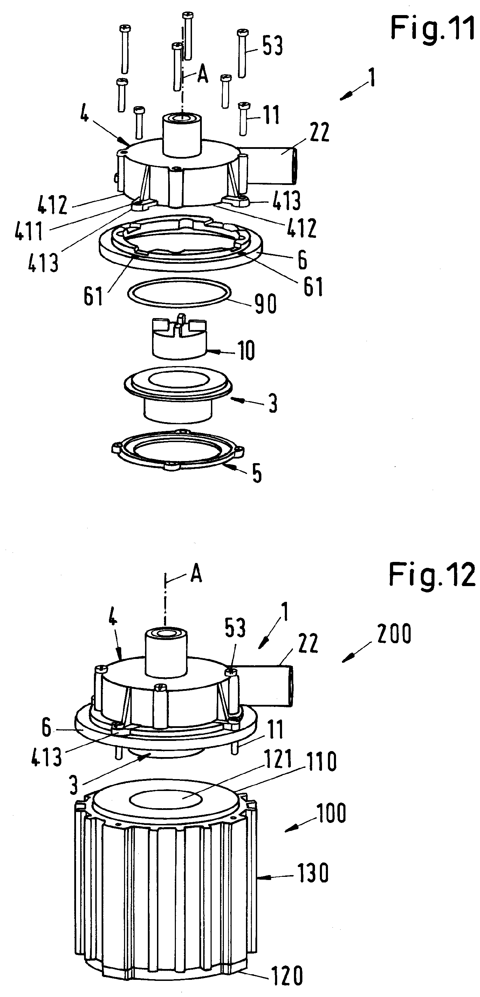

Das Pumpengehäuse 2 umfasst ein Deckelteil 4 und ein Bodenteil 3 zum Verschliessen des Deckelteils 4, wobei das Bodenteil 3 einen zylindrischen Becher 31 zur Aufnahme des Rotors 10 aufweist. Der Becher 31 ist vorzugsweise so ausgestaltet und angeordnet, dass er in eine becherförmige Ausnehmung 121 eines Stators 100 (siehe z.B. Fig. 12) einsetzbar ist. Der Stator 100 erstreckt sich in der axialen Richtung A von einem ersten axialen Ende 110 bis zu einem zweiten axialen Ende 120 und weist ein Statorgehäuse 130 auf, das im Wesentlichen zylindrisch ausgestaltet ist. Die becherförmige Ausnehmung 121 ist an dem ersten axialen Ende 110 des Stators 100 angeordnet, vorzugsweise zentral in der Stirnfläche, welche das erste axiale Ende 110 des Stators 100 bildet. Die Ausgestaltung der becherförmigen Ausnehmung 121 und des Bechers 31 kann insbesondere in analoger Weise realisiert sein, wie dies anhand der Fig. 1 erläutert wurde. Der Becher 31 ist dann also derart angeordnet und ausgestaltet, dass er in die Ausnehmung 121' (Fig. 1) im ersten axialen Ende 110' des Stators 100' einsetzbar ist, und der magnetisch wirksame Kern 101 zwischen den Querschenkeln 127' der Spulenkerne 125' angeordnet ist.

Das Deckelteil 4 ist beispielsweise über einen Presssitz mit dem Bodenteil 3 verbunden. Alternativ ist es natürlich auch möglich, das Bodenteil 3 mit dem Deckelteil 4 zu verschweissen, um so eine dichtende Verbindung zwischen dem Bodenteil 3und dem Deckelteil 4 zu realisieren.

Zwischen dem Bodenteil 3 und dem Deckelteil 4 ist ein Dichtungselement 90 vorgesehen, beispielsweise ein O-Ring oder eine Flachdichtung, um eine Leckage des Fluids in die Umgebung zu vermeiden. Für die Betriebssicherheit der Pumpeneinheit 1 ist eine zuverlässig dichtende Verbindung zwischen dem Bodenteil 3 und dem Deckelteil 4 vorteilhaft, sodass Leckagen des Fluids aus dem Inneren des Pumpengehäuses 2 zwischen dem Bodenteil 3 und dem Deckelteil 4 hindurch in den Aussenraum ausserhalb des Pumpengehäuses 2 zuverlässig verhindert werden können. Für manche Anwendungen soll diese dichtende Verbindung auch bei hohen Temperaturen von beispielsweise bis zu 220°C und/oder bei hohen Drücken und/oder für chemisch sehr aggressive Fluide, wie beispielsweise Schwefelsäure gewährleistet sein.

Das Dichtungselement 90 ist vorzugsweise als radiales Dichtungselement 90 ausgestaltet. Das bedeutet beispielsweise bei einer Ausgestaltung als O-Ring, dass das Dichtungselement 90 bezüglich der radialen Richtung zwischen dem Deckelteil 4 und dem Bodenteil 3 angeordnet ist. Bei einer Ausgestaltung als axiales Dichtelement ist das Dichtelement bezüglich der axialen Richtung A zwischen dem Bodenteil und dem Deckel angeordnet. Allgemeiner ausgedrückt ist das radiale Dichtungselement 90 in einer gekrümmten Fläche angeordnet, während ein axiales Dichtelement in einer planaren, das heisst nicht gekrümmten, Fläche angeordnet ist.

Für das Dichtungselement 90 werden Elastomere bevorzugt, insbesondere auch deshalb, weil Elastomere sehr gute Rückstellkräfte aufweisen. In der Halbleiterindustrie, wo extrem hohe Anforderungen an die Reinheit gestellt werden, ist es auch üblich, Perfluorelastomere (Perfluorkautschuk, FFPM) für das Dichtungselement 90 zu verwenden. FFPM wird insbesondere dort eingesetzt, wo eine sehr gute thermische und/oder chemische Beständigkeit notwendig ist.

Erfindungsgemäss sind sowohl der Einlass 21 als auch der Auslass 22 des Pumpengehäuses 2 am Deckelteil 3 angeordnet. Bei dieser Ausgestaltung ist also die Trennung zwischen dem Deckelteil 4 und dem Bodenteil 3 des Pumpengehäuses 2 darstellungsgemäss (Fig. 4) unterhalb des Auslasses 22 angeordnet. Hieraus resultiert der Vorteil, dass das Deckelteil 4 insbesondere sehr robust, stabil und zur Aufnahme hoher mechanischer Belastungen ausgelegt werden kann, während das Bodenteil 3 mit dem Becher 31 als ein einfaches rotationssymmetrisches Teil ausgestaltet werden kann. Das Bodenteil 3 ist vorzugsweise aus einem Kunststoff gefertigt. Das Bodenteil 3 kann beispielsweise aus PFA oder PTFE hergestellt werden. Das Bodenteil 3 kann mittels eines spanabhebenden Verfahrens, z. B. mittels Fräsen, hergestellt werden oder in einem Spritzgiessverfahren, falls der Kunststoff spritzgiessbar ist, wie beispielsweise PFA.

Alternativ ist es natürlich auch möglich, dass Bodenteil 3 aus einem metallischen Material oder aus einem keramischen Material zu fertigen. Insbesondere im Falle von metallischen Materialien sind solche bevorzugt, die einen niedrigen elektrischen Leitwert haben, um Wirbelstromverluste zu reduzieren. Geeignet sind beispielsweise Titan oder die unter dem Markennamen Hastelloy bekannte Nickelbasislegierung.

Besonders bevorzugt ist das Bodenteil 3 so ausgestaltet, dass es in das Deckelteil 4 einsetzbar ist, sodass das Deckelteil 4 das Bodenteil 3 radial aussenliegend umfasst. Diese Ausgestaltung ist insbesondere in Fig. 4 gut zu erkennen. Hierdurch ist es möglich, dass sich das Deckelteil 4 nach dem Einsetzen der Pumpeneinheit 1 in den Stator 100 direkt auf dem Stator 100 abstützt. Das heisst, das Deckelteil 4 ist in direktem körperlichem Kontakt mit dem Stator 100, sodass die auf das Deckelteil 4 wirkenden mechanischen Belastungen sehr gut in den Stator 100 bzw. in das Statorgehäuse 130 abgeleitet werden können. Insbesondere erfolgt die Kraftübertragung von dem Pumpengehäuse 2 auf den Stator 100 - zumindest grösstenteils - nicht durch das Bodenteil 3 des Pumpengehäuses 2 hindurch, sondern direkt vom Deckelteil 4 in den Stator 100. Somit können insbesondere auch die Kräfte, welche von Rohrleitungssystemen verursacht werden, die mit dem Einlass 21 oder dem Auslass 22 des Pumpengehäuses 2 verbunden sind, direkt aus dem Deckelteil 4 in den Stator 100 eingeleitet werden.

Zur Befestigung der Pumpeneinheit 1 am Stator 100 ist vorzugsweise eine Mehrzahl von Befestigungselementen 11 vorgesehen, beispielsweise eine Mehrzahl von Schrauben 11. Das Deckelteil 4 umfasst eine Mehrzahl von Befestigungsöffnungen 411 für die Befestigungselemente 11, also beispielsweise die Schrauben 11. Die Anzahl der Befestigungsöffnungen 411 ist gleich der Anzahl der Befestigungselement 11, sodass für jedes Befestigungselement 11 genau eine Befestigungsöffnung 411 vorgesehen ist.

Das Deckelteil 4 umfasst einen radial aussenliegenden Flansch 41, der vorzugsweise einstückig mit dem Rest des Deckelteils 4 ausgestaltet ist. Die Befestigungsöffnungen 411 sind in dem Flansch 41 angeordnet, sodass die Befestigungsöffnungen 411 radial aussenliegend an dem Deckelteil 4 angeordnet sind. Jede Befestigungsöffnung 41 ist beispielsweise als eine sich in axialer Richtung A erstreckende Bohrung in dem Flansch 41 ausgestaltet. Im Bereich des Flansches 41 weist das Deckelteil 4 einen Innendurchmesser auf, der mindestens so gross ist wie der maximale Aussendurchmesser des Bodenteils 3. Somit kann das Bodenteil 3 in das Deckelteil 4 eingesetzt werden und wird dann von dem Flansch 41 radial aussenliegend umschlossen. Durch diese Ausgestaltung ist es möglich, dass sich die Befestigungselemente 11 in axialer Richtung A nur durch das Deckelteil 4 hindurch erstrecken, nicht aber durch das Bodenteil 3. Dadurch kann das Deckelteil 4 des Pumpengehäuses 2 am Stator 100 fixiert werden, ohne dass die Befestigungselemente 11 das Bodenteil 3 durchdringen. Das Bodenteil 3 liegt bezüglich der radialen Richtung vollkommen innerhalb der Schrauben 11, ohne dass die Schrauben 11 das Bodenteil 3 durchgreifen.

Mittels der Befestigungselemente 11, also beispielsweise der Schrauben 11, kann somit die Pumpeneinheit 1 an dem Stator 100 fixiert werden. Dabei ist es besonders vorteilhaft, dass die Befestigungselement 11 nur das Deckelteil 4 durchgreifen, nicht aber das Bodenteil 3.

Damit das Deckelteil 4 mechanisch stabil und robust ausgestaltet werden kann, ist es bevorzugt, dass das Deckelteil 4 aus einem metallischen Material gefertigt ist. Als metallisches Material ist insbesondere ein Edelstahl oder ein rostfreier Stahl bevorzugt. Vorzugsweise ist das Deckelteil 4 als ein Gussteil ausgestaltet, das aus einem Edelstahl oder einem rostfreien Stahl gegossen wird. Ferner ist es bevorzugt, beispielsweise um die chemische Resistenz gegen aggressive Substanzen zu verbessern, dass das Deckelteil 4 auf seiner inneren Oberfläche mit einem Kunststoff beschichtet oder bespritzt ist. Für diese Kunststoffbeschichtung ist beispielsweise ein chemisch hoch resistenter Kunststoff geeignet. Beispiele für solche bevorzugten Kunststoffe sind PTFE, PFA, ECTFE (Ethylenchlortrifluorethylen), PP (Polypropylen), ETFE (Ethylen-Tetrafluorethylen), PE (Polyethylen). Ferner ist es bevorzugt, dass die äussere Oberfläche des Deckelteils 4 mit einem Kunststoff, beispielsweise mit einem Epoxidharz beschichtet ist.

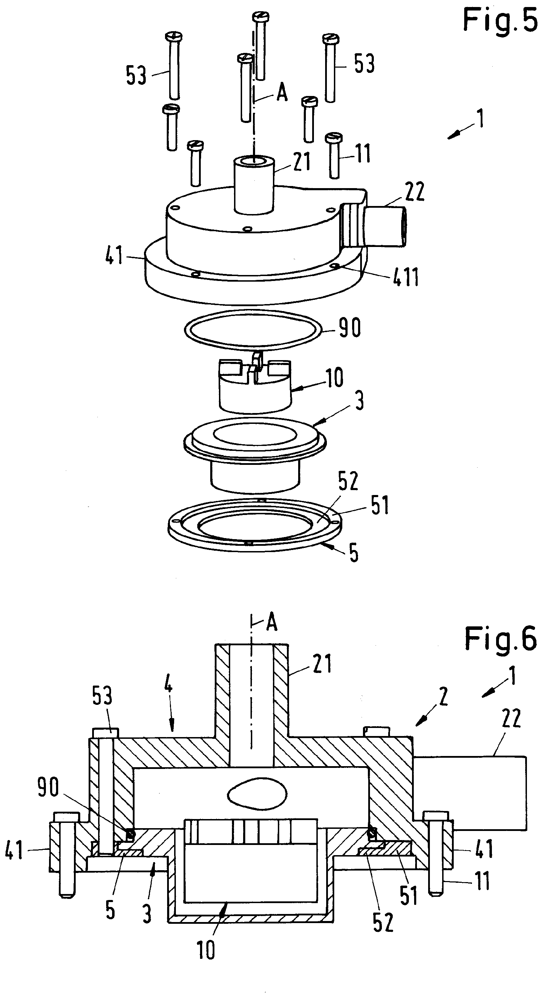

Fig.5 zeigt in einer zu Fig. 3 analogen Darstellung eine perspektivische Schnittdarstellung eines zweiten Ausführungsbeispiels einer erfindungsgemässen Pumpeneinheit 1. Zum besseren Verständnis zeigt Fig. 6 das zweite Ausführungsbeispiel in einer zu Fig. 4 analogen Schnittdarstellung.

Im Folgenden wird nur auf die Unterschiede zu dem ersten Ausführungsbeispiel eingegangen. Gleiche Teile oder von der Funktion her gleichwertige Teile des zweiten Ausführungsbeispiels sind mit den gleichen Bezugszeichen bezeichnet wie bei dem ersten Ausführungsbeispiel. Insbesondere haben die Bezugszeichen die gleiche Bedeutung wie sie bereits im Zusammenhang mit dem ersten Ausführungsbeispiel erläutert sind. Es versteht sich, dass alle vorangehenden Erläuterungen des ersten Ausführungsbeispiels in gleicher Weise oder in sinngemäss gleicher Weise auch für das zweite Ausführungsbeispiel gelten.

Bei dem zweiten Ausführungsbeispiel ist ein Montagering 5 vorgesehen, auf welchem das Bodenteil 3 aufliegt. Der Montagering 5 ist an dem Deckelteil 4 derart fixierbar, dass das Bodenteil 3 bezüglich der axialen Richtung A zwischen dem Montagering 5 und dem Deckelteil 3 eingeklemmt ist.

Wie dies insbesondere in Fig. 6 zu erkennen ist, ist der Montagering 5 radial innenliegend in dem Flansch 41 angeordnet. Der Montagering 5 hat einen radial aussenliegenden ringförmigen Rand 51 und einen ringförmigen Auflagebereich 52, der radial innenliegend benachbart zu dem ringförmigen Rand 51 angeordnet ist. Die Dicke des Montagerings 5, womit seine Erstreckung in axialer Richtung A gemeint ist, ist im Bereich des ringförmigen Randes 51 dicker als im Auflagebereich 52, sodass der Montagering ein im Wesentlichen L-förmiges Profil aufweist. Bezüglich der axialen Richtung A liegt der ringförmige Rand 51 an dem Deckelteil 4 an, während das Bodenteil 3 auf dem Auflagebereich 52 aufliegt und zwischen dem Auflagebereich 52 einerseits sowie dem Deckelteil 4 andererseits eingeklemmt ist.

Der Montagering 5 wird mittels einer Mehrzahl von Befestigungsschrauben 53 am Deckelteil 4 befestigt. Wie dies insbesondere in Fig. 6 gut ersichtlich ist, sind die Befestigungsschrauben 53 radial innenliegend bezüglich des Flansches 41 angeordnet. Jede Befestigungsschraube 53 erstreckt sich in axialer Richtung A, durchgreift das Deckelteil 4 und greift dann in ein Gewinde ein, das im Montagering 5 vorgesehen ist.

Die Ausgestaltung mit dem Montagering 5 hat den Vorteil, dass die Pumpeneinheit 1 gesamthaft aus dem Stator 100 herausgenommen bzw. gesamthaft in den Stator 100 eingesetzt werden kann. Für das Zusammenfügen bzw. das Trennen von der Pumpeneinheit 1 und dem Stator 100 ist es also nicht notwendig, das Pumpengehäuse 2 zu öffnen, beispielsweise durch Trennen des Deckelteils 4 vom Bodenteil 3. Auch lässt es sich verhindern, dass beim Herausnehmen der Pumpeneinheit 1 aus der becherförmigen Ausnehmung 121 des Stators 100 das Bodenteil 3 beispielsweise durch die starken magnetischen Kräfte in der Ausnehmung 121 festgehalten wird und nur das Deckelteil 4 vom Bodenteil 3 getrennt wird.

Die flächige Pressung des Bodenteils 3 zwischen dem Auflagebereich 52 des Montagerings 5 und dem Deckelteil 4 ist auch deshalb vorteilhaft, weil sie der Kriechneigung der aus Kunststoff, z.B. PTFE oder PFA, gefertigten Teile entgegenwirkt.

Vorzugsweise ist der Montageringe 5 als ein metallischer Ring ausgestaltet, der mit einer Kunststoffbeschichtung vollständig umschlossen ist. Für den metallischen Ring ist ein rostfreier Stahl bzw. ein Edelstahl bevorzugt. Für die Kunststoffbeschichtung ist ein chemisch hoch resistenter Kunststoff bevorzugt. Beispiele für solche bevorzugten Kunststoffe sind PTFE, PFA, ECTFE (Ethylenchlortrifluorethylen), PP (Polypropylen), ETFE (Ethylen-Tetrafluorethylen), PE (Polyethylen). Alternativ ist es auch möglich, den Montagering 5 vollständig aus einem starken bzw. stabilen Kunststoff herzustellen.

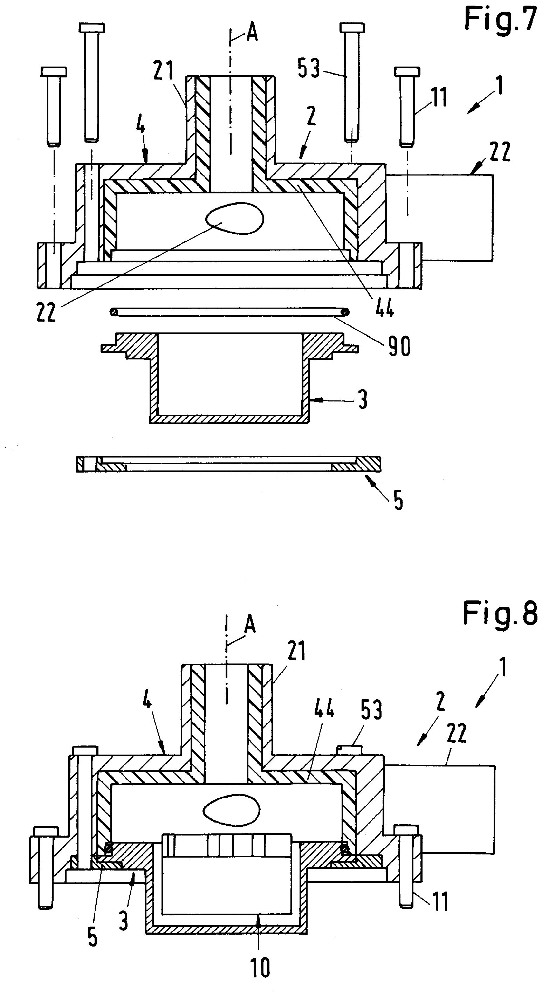

Fig.7 zeigt in einer Explosionsdarstellung einen Schnitt durch ein drittes Ausführungsbeispiels einer erfindungsgemässen Pumpeneinheit 1. Zum besseren Verständnis zeigt Fig. 8 das dritte Ausführungsbeispiel in einer zu Fig. 6 analogen Schnittdarstellung.

Im Folgenden wird nur auf die Unterschiede zu den vorangehend beschriebenen Ausführungsbeispielen eingegangen. Gleiche Teile oder von der Funktion her gleichwertige Teile des dritten Ausführungsbeispiels sind mit den gleichen Bezugszeichen bezeichnet wie bei den vorangehend beschriebenen Ausführungsbeispielen. Insbesondere haben die Bezugszeichen die gleiche Bedeutung wie sie bereits im Zusammenhang mit den vorangehend beschriebenen Ausführungsbeispielen erläutert sind. Es versteht sich, dass alle vorangehenden Erläuterungen der Ausführungsbeispiele in gleicher Weise oder in sinngemäss gleicher Weise auch für das dritte Ausführungsbeispiel gelten.

Bei dem dritten Ausführungsbeispiel ist auf der inneren Oberfläche des Deckelteils 4 eine innere Auskleidung 44 vorgesehen, die aus einem Kunststoff gefertigt ist. Vorzugsweise bedeckt die innere Auskleidung 44 die innere Oberfläche des Deckelteils 4 vollständig. Das Deckelteil 4 ist vorzugsweise aus einem Edelstahl bzw. aus einem rostfreien Stahl gefertigt. Anschliessend wird dann auf der inneren Oberfläche des Deckelteils 4 die innere Auskleidung 44 vorgesehen.

Vorzugsweise besteht die innere Auskleidung aus einem chemisch hoch resistenten Kunststoff, beispielsweise aus PTFE, PFA, ECTFE, PP, ETFE, PVDF oder PE.

Die innere Auskleidung 44 kann beispielsweise durch Einspritzen eines Kunststoffs in das Deckelteil 4 hergestellt werden. Falls der Kunststoff spritzgiessbar ist, wie beispielsweise PFA, kann vorteilhafterweise das metallische Deckelteil 4 als Teil der Spritzgiess-Form dienen. Alternativ ist es auch möglich, die innere Auskleidung 44 herzustellen, indem mehrere Kunststoffteile in das metallische Deckelteil 4 eingelegt werden, die dann zusammengeschweisst werden.

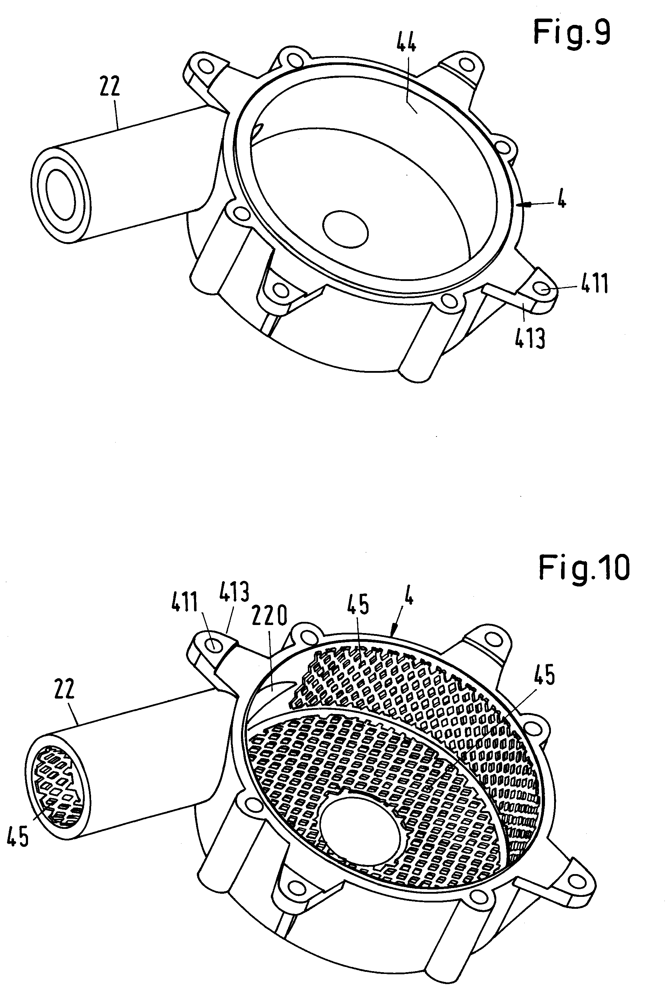

Zum besseren Verständnis zeigt Fig. 9 in einer perspektivischen Darstellung das Deckelteil 4 mit der inneren Auskleidung 44, die auf der inneren Oberfläche des Deckelteils 4 angeordnet ist.

Fig. 10 zeigt in einer zu Fig. 9 analogen Darstellung eine Variante des Deckelteils 4, wobei in Fig. 10 zum besseren Verständnis die innere Auskleidung 44 nicht dargestellt ist. Bei der in Fig. 10 dargestellten Variante sind auf der inneren Oberfläche des Deckelteils 4 Ankerstrukturen 45 angeordnet, welche die Verbindung zwischen der inneren Auskleidung 44 und der inneren Oberfläche des Deckelteils 4 verbessern. Diese Ankerstrukturen 45 sind so ausgestaltet, dass sich die innere Auskleidung 44 in der inneren Oberfläche des Deckelteils 4 verhaken kann. Diese Verankerungsstrukturen 45 können beispielsweise als Vertiefungen, Erhebungen, Kerben, Nuten, Grübchen (dimple) oder sonstige Strukturen ausgestaltet sein, welche der inneren Oberfläche des Deckelteils eine Textur verleihen, in welcher sich die innere Auskleidung 44 verhaken kann. Vorteilhaft sind insbesondere auch solche Ankerstrukturen, die Hinterschnitte aufweisen, weil solche Hinterschnitte eine besonders starke Verankerung ermöglichen.

Die Ankerstrukturen 45 haben den Vorteil, dass durch die Verhakung der inneren Auskleidung 44 in der inneren Oberfläche des Deckelteils 4, noch besser ein teilweises oder vollständiges Ablösen der inneren Auskleidung 44 verhindert wird. Die Gefahr des Ablösens besteht insbesondere dann, wenn die innere Auskleidung in das Deckelteil 4 eingespritzt wird, weil die für die Auskleidung verwendeten Kunststoffe häufig andere thermische Eigenschaften, beispielsweise Expansionskoeffizienten haben als das metallische Material, aus dem das Deckelteil hergestellt ist.

Fig.11 zeigt in einer zu Fig. 5 analogen Explosionsdarstellung einen Schnitt durch ein viertes Ausführungsbeispiels einer erfindungsgemässen Pumpeneinheit 1. Zum besseren

Verständnis zeigt Fig. 12 das vierte Ausführungsbeispiel in einer perspektivischen Ansicht zusammen mit dem Stator 100, in welchen die Pumpeneinheit einsetzbar ist.

Im Folgenden wird nur auf die Unterschiede zu den vorangehend beschriebenen Ausführungsbeispielen eingegangen. Gleiche Teile oder von der Funktion her gleichwertige Teile des vierten Ausführungsbeispiels sind mit den gleichen Bezugszeichen bezeichnet wie bei den vorangehend beschriebenen Ausführungsbeispielen. Insbesondere haben die Bezugszeichen die gleiche Bedeutung wie sie bereits im Zusammenhang mit den vorangehend beschriebenen Ausführungsbeispielen erläutert sind. Es versteht sich, dass alle vorangehenden Erläuterungen der Ausführungsbeispiele in gleicher Weise oder in sinngemäss gleicher Weise auch für das vierte Ausführungsbeispiel gelten.

Bei dem vierten Ausführungsbereich ist zwischen zwei in Umfangsrichtung benachbarten Befestigungsöffnungen 411 jeweils eine radiale Ausnehmung 412 vorgesehen, derart, dass ein Aussendurchmesser des Deckelteils 4 an den Befestigungsöffnungen 411 grösser ist als an der dazwischen angeordneten radialen Ausnehmung 412. Vorzugsweise sind die radialen Ausnehmungen 412 so ausgestaltet, dass von dem radial aussenliegenden Flansch 41 (siehe z. B. Fig. 3) im Wesentlichen nur noch einzelne Stege 413 vorhanden sind, von denen sich jeder in radialer Richtung erstreckt. In jedem dieser Stege 413 ist jeweils genau eine der Befestigungsöffnungen 411 vorgesehen. Bezüglich der Umfangsrichtung sind dann die radialen Ausnehmungen zwischen den Stegen 413 angeordnet.

Eine solche Ausgestaltung des Deckelteils 4 mit den Stegen 413 ist auch in den Fig. 9 und Fig. 10 gezeigt.

Die radialen Ausnehmungen 412 zwischen den Stegen 413 mit den Befestigungsöffnungen 411 haben den Vorteil, dass im Betriebszustand Wirbelstromverluste erheblich reduziert werden. Da das Deckelteil 4 vorzugsweise aus einem metallischen Material besteht, werden durch die Ströme, sie im Betriebszustand im Stator 100 fliessen, in dem Deckelteil 4 Wirbelströme induziert, welche zu unerwünschten Verlusten führen. Durch die radialen Ausnehmungen 412 lassen sich diese Wirbelstromverluste erheblich reduzieren.

Als eine weitere vorteilhafte Massnahme ist ein Abdeckring 6 vorgesehen, der aus einem elektrisch schlecht leitenden Material besteht. Als ein elektrisch schlecht leitendes Material wird insbesondere ein solches Material angesehen, dessen spezifischer Widerstand grösser ist als $10^5$ Ohm Quadratmillimeter pro Meter ( $\Omega \cdot mm^2 / m$ .). Der Abdeckring 6 ist so angeordnet, dass der Abdeckring 6 nach dem Einsetzen der Pumpeneinheit 1 in den Stator 100 bezüglich der axialen Richtung A zwischen den Befestigungsöffnungen 411 und dem Stator 100 angeordnet ist.

Der Abdeckring 6 hat einen Innendurchmesser, der grösser ist als der Aussendurchmesser des Montagerings 5 (falls vorhanden) und grösser als der maximale Aussendurchmesser des Bodenteils 3. Ferner ist der Innendurchmesser des Abdeckrings 6 so bemessen, dass die Stege 413 auf dem Abdeckring 6 aufliegen können. Wie dies insbesondere in Fig. 11 zu erkennen ist, weist der Abdeckring eine Mehrzahl von Nuten 61 auf, die sich jeweils in radialer Richtung erstrecken, und die derart bemessen und angeordnet sind, dass jede der Nuten 61 jeweils eine der Stege 413 aufnehmen kann. Bei dieser Ausgestaltung mit den Nuten 61 füllen die Bereiche des Abdeckrings 6 die in Umfangsrichtung gesehen zwischen den Nuten 61 angeordnet sind. Die radialen Ausnehmungen 412 zwischen den Stegen 413 aus, was die Stabilität des Pumpeneinheit 1 erhöht.

Durch diesen elektrisch schlecht leitenden Abdeckring 6 werden zudem die Wirbelstromverluste im Deckelteil 4 noch weiter reduziert. Ferner dient der Abdeckring 6 dem Schutz des Stators 100.

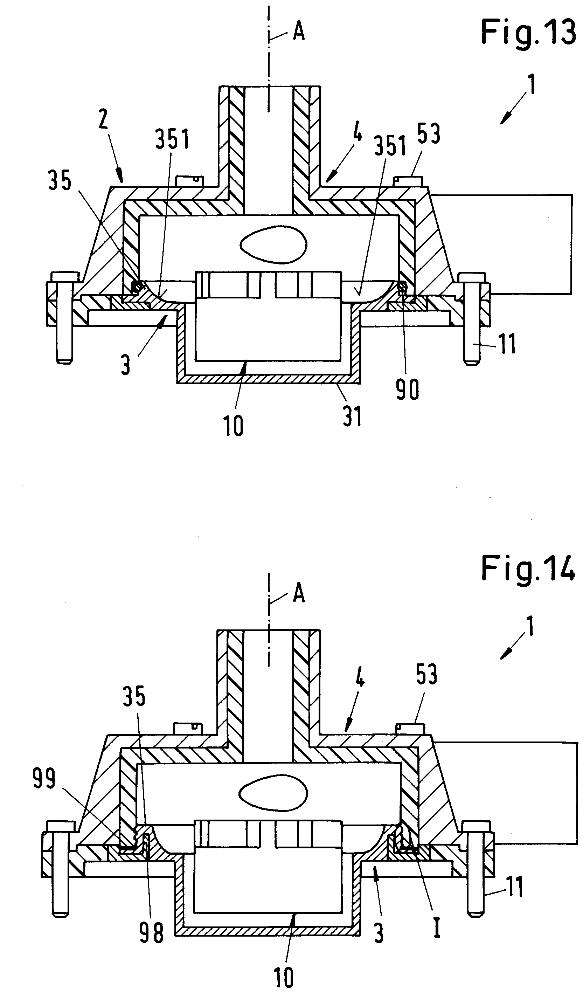

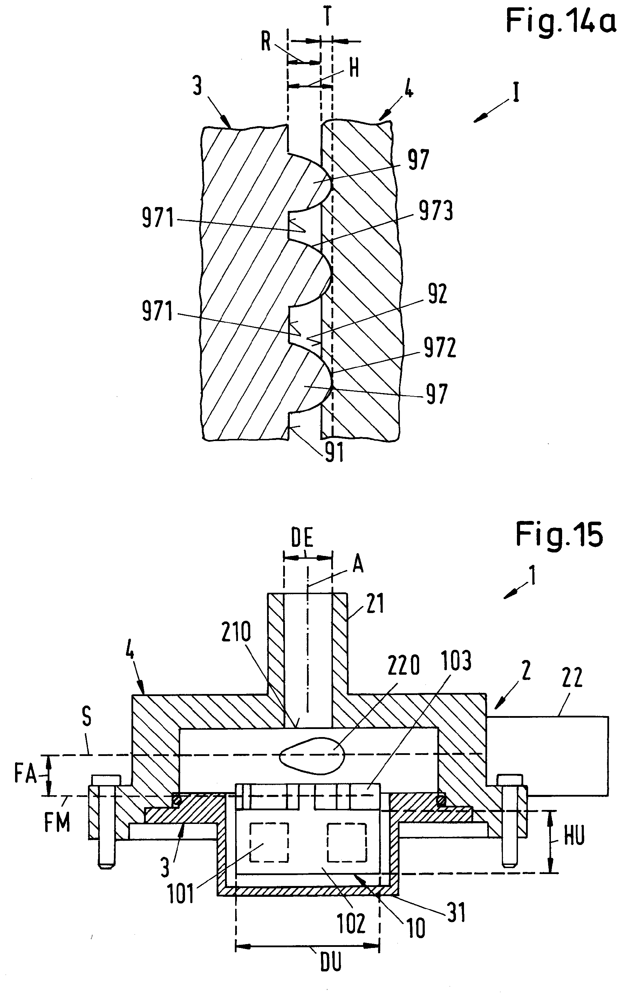

Im Folgenden werden anhand der Fig. 13, Fig. 14 und Fig. 14a noch bevorzugte Ausgestaltungeng für die Abdichtung zwischen dem Bodenteil 3 und dem Deckelteil 4 erläutert. Es versteht sich, dass diese Ausgestaltungen der Abdichtung in analoger Weise auch bei den vorangehend beschriebenen Ausführungsbeispielen vorgesehen sein kann.

Fig. 13 zeigt in einer zu Fig. 8 analogen Darstellung eine Schnittdarstellung eines fünften Ausführungsbeispiels einer erfindungsgemässen Pumpeneinheit 1.

Im Folgenden wird nur auf die Unterschiede zu den vorangehend beschriebenen Ausführungsbeispielen eingegangen. Gleiche Teile oder von der Funktion her gleichwertige Teile des fünften Ausführungsbeispiels sind mit den gleichen Bezugszeichen bezeichnet wie bei den vorangehend beschriebenen Ausführungsbeispielen. Insbesondere haben die Bezugszeichen die gleiche Bedeutung wie sie bereits im Zusammenhang mit den vorangehend beschriebenen Ausführungsbeispielen erläutert sind. Es versteht sich, dass alle vorangehenden Erläuterungen der Ausführungsbeispiele in gleicher Weise oder in sinngemäss gleicher Weise auch für das fünfte Ausführungsbeispiel gelten.

Bei dem fünften Ausführungsbeispiel ist wiederum das als radiales Dichtungselement 90 ausgestaltete Dichtungselement 90 vorgesehen, das als O-Ring ausgestaltet ist, welcher bezüglich der radialen Richtung zwischen dem Deckelteil 4 und dem Bodenteil 3 angeordnet ist.

Bei dem fünften Ausführungsbeispiel ist das Bodenteil 3 derart ausgestaltet, dass der im Betriebszustand im Pumpengehäuse 2 herrschend Druck eine in radialer Richtung gerichtete Kraft auf das radiale Dichtungselement 90 bewirkt, welche die Dichtwirkung zwischen dem Bodenteil 3 und dem Deckelteil 4 verstärkt. Dazu ist das Bodenteil 3 mit einem radialen Aussenrand 35 ausgestaltet, welcher den Becher 31 des Bodenteils 3 bezüglich der axialen Richtung A überragt, sodass dieser Aussenrand 35 weiter in das Deckelteil 4 hineinreicht als der Becher 31. Der Übergangsbereich zwischen dem Aussenrand 35 und dem Becher 31 ist gekrümmt ausgestaltet. Hierdurch wird eine gekrümmte Druckfläche 351 ausgebildet, auf welche im Betriebszustand der Druck wirkt, der im Inneren des Pumpengehäuses 2 wirkt. Dieser Druck verursacht eine in radialer Richtung gerichtete Kraftkomponente, welche den Aussenrand 35 gegen das radiale Dichtungselement 90 presst. Hierdurch wird die Dichtwirkung zwischen dem Deckelteil 4 und dem Bodenteil 3 verbessert.

Fig. 14 zeigt in einer zu Fig. 13 analogen Darstellung eine Schnittdarstellung eines sechsten Ausführungsbeispiels einer erfindungsgemässen Pumpeneinheit 1. Zum besseren Verständnis zeigt Fig. 14a noch eine vergrösserte Darstellung des Details I aus Fig. 14.

Im Folgenden wird nur auf die Unterschiede zu den vorangehend beschriebenen Ausführungsbeispielen eingegangen. Gleiche Teile oder von der Funktion her gleichwertige Teile des sechsten Ausführungsbeispiels sind mit den gleichen Bezugszeichen bezeichnet wie bei den vorangehend beschriebenen Ausführungsbeispielen. Insbesondere haben die Bezugszeichen die gleiche Bedeutung wie sie bereits im Zusammenhang mit den vorangehend beschriebenen Ausführungsbeispielen erläutert sind. Es versteht sich, dass alle vorangehenden Erläuterungen der Ausführungsbeispiele in gleicher Weise oder in sinngemäss gleicher Weise auch für das sechste Ausführungsbeispiel gelten.

Bei dem sechsten Ausführungsbeispiel ist kein separates Dichtungselement 90 zwischen dem Bodenteil 3 und dem Deckelteil 4 vorgesehen.

Bei dem sechsten Ausführungsbeispiel umfasst das Bodenteil 3 eine im Wesentlichen ringförmige erste Dichtfläche 91 zum dichtenden Zusammenwirken mit dem Deckelteil 4 auf, und das Deckelteil 4 eine im Wesentlichen ringförmige zweite Dichtfläche 92 zum Zusammenwirken mit der ersten Dichtfläche 91, wobei die erste Dichtfläche 91 und die zweite Dichtfläche 92 bezüglich der axialen Richtung überlappen, sodass eine radiale Dichtung herstellbar ist. Falls das Deckelteil 4 - wie dies in Fig. 14 dargestellt ist - mit der inneren Auskleidung 44 ausgestaltet ist, so ist die zweite Dichtfläche 92 an der inneren Auskleidung 44 vorgesehen. Die erste Dichtfläche 91 ist bei dem sechsten Ausführungsbeispiel an dem radialen Aussenrand 35 des Bodenteils 3 angeordnet.

Für das dichtende Zusammenwirken ist eine der beiden Dichtflächen 91 oder 92 als Rippenfläche mit mindestens einer radialen Dichtungsrippe 97 ausgestaltet, die sich in Umfangsrichtung entlang der gesamten Dichtfläche 91 oder 92 erstreckt, während die andere der beiden Dichtflächen 91 oder 92 als glatte Fläche ausgestaltet ist.

Bei dem in Fig. 14 und Fig. 14a dargestellten sechsten Ausführungsbeispiel ist die erste Dichtfläche 91, also die Dichtfläche 91 des Bodenteils 3, als die Rippenfläche ausgestaltet, und die zweite Dichtfläche 92, also die Dichtfläche 92 des Deckelteils 4, als die glatte Fläche.

Vorzugsweise umfasst die Rippenfläche mehrere - beim sechsten Ausführungsbeispiel genau drei - radiale Dichtungsrippen 97, von denen sich jede vollständig entlang der gesamten Rippenfläche erstreckt, wobei die individuellen Dichtungsrippen 97 bezüglich der axialen Richtung A benachbart zueinander angeordnet sind. Jede Dichtungsrippe 97 ist als geschlossener kreisförmiger Ring ausgestaltet. Jede radiale Dichtungsrippe 97 ist so ausgestaltet, dass sie radiale Kräfte aufnehmen kann. Hierzu ist es zwar bevorzugt, aber nicht notwendig, dass die Dichtungsrippe 97 senkrecht bzw. rechtwinklig zur axialen Richtung A ausgerichtet ist. Es sind auch Ausgestaltungen möglich, bei denen die Dichtungsrippe 97 schräg, also unter einem von 90° verschiedenen Winkel zur axialen Richtung A auf der Dichtfläche 91 oder 92 angeordnet ist. Wesentlich ist nur, dass die radiale Dichtungsrippe 97 in radialer Richtung eine ausreichende Erstreckung hat, um radiale Kräfte aufnehmen zu können.

Es versteht sich, dass die Anzahl von drei Dichtungsrippen 97 beispielhaft zu verstehen ist. Es können auch mehr als drei oder weniger als drei Dichtungsrippen 97 in der als Rippenfläche ausgestalteten Dichtfläche 91 oder 92 vorgesehen sein.

Bezüglich der Dichtungsrippen 97 sind natürlich auch Varianten möglich, bei denen die zweite Dichtfläche 92 als Rippenfläche ausgestaltet ist, und die erste Dichtfläche 91 als glatte Fläche. Es sind also beide Ausführungsformen möglich, nämlich, dass jede Dichtungsrippe 97 am Bodenteil 3 vorgesehen ist und die zweite Dichtfläche 92 am Deckelteil 4 als glatte Fläche ausgestaltet ist, und, dass jede Dichtungsrippe 97 am Deckelteil 4 vorgesehen ist und die erste Dichtfläche 91 am Bodenteil 3 als glatte Fläche ausgestaltet ist.

Mit dem Begriff, dass eine der Dichtflächen 91, 92 als "glatte Fläche" ausgestaltet ist, ist gemeint, dass dies Fläche keine Vertiefungen oder Ausnehmungen, wie beispielsweise Nuten aufweist, in welche die Dichtungsrippen 97 eingreifen könnten. Natürlich ist es möglich, dass die glatte Fläche durch die Dichtungsrippen 97 plastisch oder elastisch deformiert wird, aber in der als glatte Fläche ausgestalteten Dichtfläche 91 oder 92 ist keine Textur bzw. keine Struktur vorgesehen, in welche die Dichtungsrippen 97 eingreifen könnten, also insbesondere keine Nuten. Die Dichtwirkung zwischen der als Rippenfläche ausgestalteten Dichtfläche 91 oder 92 und der als glatte Fläche ausgestalteten Dichtfläche 92 oder 91 basiert auf der Pressung der Dichtungsrippen 97 gegen die glatte Fläche und nicht auf einem Eingreifen der Dichtungsrippen 97 in Nuten oder sonstige Ausnehmungen.

Die Dichtungsrippen 97 sind vorzugsweise integraler Bestandteil der ersten oder der zweiten Dichtfläche 91, 92. Die Dichtungsrippen 97 können beispielsweis in einem Spritzverfahren hergestellt werden. Wenn beispielsweise das Bodenteil 3 in einem Spritzgiessverfahren hergestellt wird, so können die Dichtungsrippen 97 im Rahmen dieses Spritzgiessens durch eine dementsprechende Ausgestaltung der Spritzgiessform bzw. des Werkzeugs erzeugt werden. Es ist aber auch möglich, die Dichtungsrippen 97 in einem subtraktiven Bearbeitungsverfahren herzustellen. Die Dichtungsrippen 97 können beispielsweise mittels einer spanabhebenden Bearbeitung, z.B. Fräsen, aus der ersten oder der zweiten Dichtfläche 91, 92 herausgearbeitet werden.

Das dichtende Zusammenwirken zwischen der ersten Dichtfläche 91 und der zweiten Dichtfläche 92 basiert auf einem Presssitz zwischen dem Deckelteil 4 und dem Bodenteil 3, was anhand von Fig. 14a noch näher erläutert wird.

Optional aber bevorzugt umfasst die Pumpeneinheit 1 ferner ein radiales Verstärkungselement 98, welches ringförmig ausgestaltet ist, und radial innenliegend bezüglich der beiden Dichtflächen 91, 92 angeordnet ist. Vorzugsweise ist das radiale Verstärkungselement 98 als ein metallischer Ring ausgestaltet, der mit einer Kunststoffbeschichtung vollständig umschlossen ist. Für den metallischen Ring ist ein rostfreier Stahl bzw. ein Edelstahl bevorzugt. Für die Kunststoffbeschichtung ist ein chemisch hoch resistenter Kunststoff bevorzugt. Beispiele für solche bevorzugten Kunststoffe sind PTFE, PFA, ECTFE, PP, ETFE, PE. Alternativ ist es auch möglich, das radiale Verstärkungselement 98 vollständig aus einem starken bzw. stabilen Kunststoff herzustellen.

Das radiale Verstärkungselement 98 ist bei dem sechsten Ausführungsbeispiel in dem radialen Aussenrand 35 angeordnet und stabilisiert insbesondere die erste Dichtfläche 91, sodass diese auch bei höheren Drücken im Pumpengehäuse 2 noch besser in dichtendem Kontakt mit der zweiten Dichtfläche 92 bleibt. Das radiale Verstärkungselement 98 trägt dazu bei, Relativbewegungen zwischen den beiden Dichtflächen 91, 92 zu vermeiden, die schlimmstenfalls zum Öffnen von Spalten führen könnten, durch welche das Fluid aus dem Pumpengehäuse 2 austreten könnte. Eine weitere Funktion des radialen Verstärkungselements 98 ist es, einem Kriechen insbesondere des Bodenteils 3 entgegenzuwirken. Ferner kann das radiale Verstärkungselement 98 auch so ausgestaltet werden, dass es eine Federwirkung in radialer Richtung nach aussen ausübt, welche den Presssitz zwischen den Dichtflächen 91, 92 beaufschlagt. Hierdurch ist es möglich, falls sich beispielsweise das Bodenteil 3 verzieht, den Presssitz zwischen dem Deckelteil 4 und dem Bodenteil 3 nachzuführen.

Bei Ausführungsformen, bei denen die Pumpeneinheit 1 mit dem Montagering 5 ausgestaltet ist, ist es eine bevorzugte Massnahme, dass das radiale Verstärkungselement 98 einstückig mit dem Montagering 5 ausgestaltet ist. Eine solche Ausführungsform, bei welcher das radiale Verstärkungselement 98 einstückig mit dem Montagering ausgeführt ist, zeigt Fig. 14.

Optional ist zusätzlich eine ringförmige Sicherheitsdichtung 99 vorgesehen, welche im Fehlerfall ein Austreten des Fluids zwischen dem Bodenteil 3 und dem Deckelteil 4 verhindert. Die Sicherheitsdichtung 99 ist hier als axiale Dichtscheibe ausgestaltet, welche bezüglich der axialen Richtung A zwischen dem Montagering 5 und dem Deckelteil 4 angeordnet ist. Bezüglich der radialen Richtung ist die Sicherheitsdichtung 99 benachbart und radial aussenliegend bezüglich der beiden Dichtflächen 91, 92 angeordnet. Im fehlerfreien Betriebszustand der Pumpeneinheit 1 kommt die Sicherheitsdichtung 99 folglich nicht mit dem Fluid in Kontakt. Durch das dichtende Zusammenwirken der ersten Dichtfläche 91 mit der zweiten Dichtfläche 6 kann das Fluid nicht bis an die Sicherheitsdichtung 99 vordringen, sodass auch umgekehrt keine Gefahr besteht, dass das Fluid durch die Sicherheitsdichtung 99 verunreinigt wird.

Sollte es im Betrieb jedoch zu einer Störung kommen, durch welche die Dichtwirkung zwischen den beiden Dichtflächen 91, 92 nicht mehr im ausreichenden Masse gewährleistet ist, so verhindert die Sicherheitsdichtung 99 einerseits, dass das Fluid ungewollt bzw. unkontrolliert aus dem Pumpengehäuse 2 austritt, sodass beispielsweise aggressive oder anderweitig gefährlich Fluide nicht in die Umwelt bzw. in den Aussenraum des Pumpengehäuses 2 gelangen können. Andererseits verhindert die Sicherheitsdichtung 99 in solchen Fehlerfällen, dass von aussen Substanzen in den Innenraum des Pumpengehäuses 2 eindringen, welche zur Kontamination des Fluids und damit zur Unbrauchbarkeit des Fluids oder der mit dem Fluid behandelten Produkte, beispielsweise Wafer in der Halbleiterindustrie, führen können.

Solche Fehlerfälle, die zu einer nicht mehr ausreichenden Dichtwirkung durch die beiden Dichtflächen 5, 6 führen können, basieren beispielsweise auf Kriecheffekten, insbesondere Langzeitkriecheffekten, oder auf druck- und/oder temperaturinduzierten Deformationen, beispielsweise des Deckelteils 4 oder des Bodenteils 3.

Die Sicherheitsdichtung 99 ist vorzugsweise als eine ringförmige Flachdichtung ausgestaltet.

Die Sicherheitsdichtung 99 besteht vorzugsweise aus einem Kunststoff, beispielsweise aus einem Kunststoff, der üblicherweise zum Abdichten bei hohen Temperaturen und/oder chemisch aggressiven Fluiden verwendet wird. Die Sicherheitsdichtung 99 kann beispielsweise aus PTFE bestehen. Hierbei ist es bevorzugt, dass die Sicherheitsdichtung aus ePTFE (expanded PTFE) besteht, insbesondere weil ePTFE bessere elastische Eigenschaften aufweist als PTFE. Natürlich ist es auch möglich, an sich bekannte Elastomere für die Sicherheitsdichtung 99 zu verwenden.

Der Presssitz zwischen dem Deckelteil 4 und dem Bodenteil 3 ist in der vergrösserten Darstellung des Details I in Fig. 14a dargestellt. Wie bereits erwähnt, ist jede radiale Dichtungsrippe 97 kreisringförmig ausgestaltet, wobei die individuellen Dichtungsrippen 97 bezüglich der axialen Richtung A benachbart zueinander angeordnet sind. Zwischen zwei benachbarten Dichtungsrippen 97 ist jeweils ein Tal 971 vorgesehen, wobei jedes Tal 971 von der als glatten Fläche ausgestalteten Dichtfläche - hier die zweite Dichtfläche 92 - einen radialen Abstand R hat.

Jede Dichtungsrippe 97 hat einen Berg 972, womit diejenige Stelle der Dichtungsrippe 97 gemeint ist, welche in radialer Richtung gemessen am weitesten von dem benachbarten Tal 971 entfernt ist. Jede Dichtungsrippe 97 hat eine Höhe H, womit der in radialer Richtung gemessene senkrechte Abstand zwischen dem Berg 972 und dem benachbarten Tal 971 bezeichnet wird. Der Berg 972 ist über jeweils eine Wand 973 mit den benachbarten Tälern verbunden.

Die Höhe H der Dichtungsrippe bezieht sich dabei auf den Zustand, wenn das Bodenteil 3 noch nicht in das Deckelteil 4 eingesetzt ist. Nachdem das Bodenteil 3 in das Deckelteil 4 eingesetzt ist, also in dem Zustand, wie er beispielsweise in Fig. 14 dargestellt ist, tauchen die Dichtungsrippen 97, beispielsweise durch Deformation der als glatten Fläche ausgestalteten zweiten Dichtfläche 92, um eine Eintauchtiefe T in die glatte Fläche ein. Die Eintauchtiefe T gibt also die in radialer Richtung gemessene Differenz zwischen der Position des Bergs 972 und dem nicht deformierten Bereich der glatten Oberfläche an, welcher einem der Täler 971 gegenüberliegt.

Die Stärke des Presssitzes zwischen dem Deckelteil 4 und dem Bodenteil 3 hängt unter anderem von dem radialen Abstand R, der Höhe H und der Eintauchtiefe T ab, wobei insbesondere die Eintauchtiefe T von den Materialeigenschaften des Materials oder der Materialien abhängt, aus denen das Deckelteil 4 und das Bodenteil 3 gefertigt sind.

In der Praxis hat es sich bewährt, dass die Höhe H mindestens so gross, vorzugsweise grösser ist als der radiale Abstand R. Die Eintauchtiefe T kann - zumindest näherungsweise - null betragen, sodass die Dichtungsrippe 97 an der glatten Fläche anliegt. Bevorzugt ist es jedoch, wenn die Eintauchtiefe T grösser als null ist, sodass die Dichtungsrippe 97 in die glatte Fläche eintaucht. Der radiale Abstand R kann - zumindest näherungsweise - null betragen. Bevorzugt ist es jedoch, wenn der radiale Abstand R grösser als null ist.

Der radiale Abstand R ist vorzugsweise nicht kleiner als null. Falls der radiale Abstand R kleiner als null ist, ist der am Tal 971 gemessene Durchmesser des Bodenteils 3 grösser als der Innendurchmesser der glatten Fläche, hier also der zweiten Dichtfläche 92. Falls der radiale Abstand R kleiner als null ist, so wirkt sich das negativ auf die Trennbarkeit des Bodenteils 3 vom Deckelteil 4. Eine solche Trennung kann beispielsweise notwendig sein, weil der Rotor 10 gewechselt werden muss.

Im Hinblick auf eine besonders zuverlässige berührungslos magnetische Lagerung des Rotors 10 und insbesondere im Hinblick auf eine besonders gute passiv magnetische Lagerung bzw. Stabilisierung des Rotors 10 sind bestimmte Bereiche für die geometrische Ausgestaltung des Rotors 10 und für die Anordnung des Auslasses 22 des Pumpengehäuses 2 bevorzugt. Dies wird im Folgenden unter Bezugnahme auf Fig. 15 näher erläutert.

Fig. 15 zeigt in einer zu Fig. 4 analogen Darstellung nochmals das erste Ausführungsbeispiel, wobei verschiedene Abmessungen veranschaulicht sind, die im Folgenden erläutert werden. Es versteht sich, dass diese Erläuterungen der Abmessungen nicht nur für das erste Ausführungsbeispiel gelten, sondern in sinngemäss gleicher Weise für alle anderen Ausführungsbeispiele der erfindungsgemässen Pumpeneinheit 1 und deren Varianten.

Der Auslass 22 hat eine Eintrittsfläche 220, womit diejenige Fläche gemeint ist, durch welche das Fluid aus dem Innenraum des Pumpengehäuses 2 in den Auslass 22 einströmt (siehe auch Fig. 10). Die Eintrittsfläche 220 des Auslasses 22 ist beispielsweise als Oval ausgestaltet. Im Speziellen ist die Eintrittsfläche 220 als ein Oval mit einer Symmetrieachse S ausgestaltet, wobei die Symmetrieachse S senkrecht auf der axialen Richtung A steht. Die Eintrittsfläche 220 ist am Deckelteil 4 angeordnet.

Der Einlass 21 hat eine Austrittsfläche 210, womit diejenige Fläche gemeint ist, durch welche das Fluid aus dem Einlass 21 in den Innenraum des Pumpengehäuses 2 strömt. Die Austrittsfläche 210 des Einlasses 21 ist beispielsweise als Kreisfläche ausgestaltet, die einen Durchmesser DE aufweist. Die Austrittsfläche 210 des Einlasses 21 ist am Deckelteil 4 angeordnet.

Der Rotor 10 umfasst den magnetisch wirksamen Kern 101, die Kunststoffummantelung 102 und die auf der Kunststoffummantelung 102 angeordneten Flügel 103. Der Rotor 10 hat einen Durchmesser DU, womit hier der Durchmesser DU der Kunststoffummantelung 102 gemeint ist, welche den magnetisch wirksamen Kern 101 umschliesst. Die Kunststoffummantelung 102 hat ferner eine Höhe HU, womit die Erstreckung der Kunststoffummantelung 102 in axialer Richtung A gemeint ist. Die Höhe HU entspricht somit der in axialer Richtung A gemessenen Höhe des Rotors 10 reduziert um die Höhe der Flügel 103.

Jeder Flügel 103 hat eine Mittelachse FM, womit die zur axialen Richtung A senkrechte Mittellinien gemeint ist, welche den jeweiligen Flügel 103 bezüglich der axialen Richtung A in zwei gleich hohe Teile teilt. Die Mittelachsen FM aller Flügel 103 liegen alle in einer Ebene, wobei diese Ebene senkrecht auf der axialen Richtung A steht. Die Mittelachsen FM der Flügel 103 haben von der Symmetrieachse S der Eintrittsfläche 220 des Auslasses 22 einen Austrittsabstand FA.

Insbesondere im Hinblick auf eine möglichst gute magnetische Stabilisierung des Rotors 10 gegen Verkippungen ist es vorteilhaft, dass der Austrittsabstand FA der Symmetrieachse S der Eintrittsfläche 220 des Auslasses 22 von der Mittelachse FM der Flügel 103 möglichst gering ist. Ferner ist es bevorzugt, dass das Verhältnis aus dem Austrittsabstand FA und dem Durchmesser DU der Kunststoffummantelung 102 kleiner als 0.26 ist und besonders bevorzugt kleiner als 0.21.

Insbesondere im Hinblick auf die axiale Stabilität des Rotors 10, also die passive magnetische Stabilisierung des Rotors 10 bezüglich der axialen Richtung A, ist es bevorzugt, dass das Verhältnis aus dem Durchmesser DE der Austrittsfläche 210 des Einlasses 21 und dem Durchmesser DU der Kunststoffummantelung 102 zwischen 0.25 und 0.99 liegt und besonders bevorzugt zwischen 0.31 und 0.83.

Bezüglich der Abmessung der Kunststoffummantelung 102 ist es bevorzugt, dass das Verhältnis aus der Höhe HU der Kunststoffummantelung 102 und dem Durchmesser DU der Kunststoffummantelung 102 zwischen 0.31 und 0.79 liegt, besonders bevorzugt zwischen 0.39 und 0.65.

Durch die Erfindung wird ferner die Zentrifugalpumpe 200 zum Fördern eines Fluids mit einer Pumpeneinheit 1 vorgeschlagen, wobei die Pumpeneinheit 1 erfindungsgemäss ausgestaltet ist. Fig. 16 zeigt in einer schematischen Schnittdarstellung ein Ausführungsbeispiel einer erfindungsgemässen Zentrifugalpumpe 200. Die Zentrifugalpumpe 200 umfasst den Stator 100, der sich in der axialen Richtung A von einem ersten axialen Ende 110 bis zu einem zweiten axialen Ende 120 erstreckt, wobei an dem ersten axialen Ende 110 eine becherförmige Ausnehmung 121 (in Fig. 16 nicht dargestellt, siehe z.B. Fig.12) vorgesehen ist, in welche der zylindrischen Becher 31 der Pumpeneinheit 1 einsetzbar ist. Der Stator 100 bildet mit dem Rotor 10 einen elektromagnetischen Drehantrieb zum Rotieren des Rotors 10 um die axiale Richtung A bildet, wobei der Stator 100 als Lager- und Antriebsstator ausgestaltet ist, mit welchem der Rotor 10 berührungslos magnetisch antreibbar und berührungslos magnetisch bezüglich des Stators 100 lagerbar ist, wobei der Rotor 10 bezüglich der axialen Richtung A passiv magnetisch stabilisiert ist, und in einer zur axialen Richtung A senkrechten radialen Ebene E aktiv magnetisch gelagert ist.

Der Stator 100 umfasst ein Statorgehäuse 130 (siehe Fig. 12), das in Fig. 16 aus Gründen der besseren Übersicht nicht dargestellt ist. Der Stator 100 kann aber beispielsweise in analoger Weise ausgestaltet sein, wie der in Fig. 1 dargestellte Stator 100' mit dem Statorgehäuse 130', wobei in dem Statorgehäuse 130' die Ausnehmung 121' vorgesehen ist, in welche der zylindrische Becher 31 des Bodenteils 3 des Pumpengehäuses 1 eingesetzt wird.

Besonders bevorzugt ist der elektromagnetische Drehantrieb mit dem Rotor 10 und dem Stator 100 als Tempelmotor ausgestaltet, wobei der Stator 100 eine Mehrzahl von Spulenkernen 125 aufweist, von denen jeder einen Längsschenkel 126 umfasst, welcher sich von einem ersten Ende in axialer Richtung A bis zu einem zweiten Ende erstreckt, sowie einen Querschenkel 127, welcher an dem zweiten Ende des Längsschenkels 126 und in der radialen Ebene E angeordnet ist. Der Querschenkel 127 erstreckt sich von dem Längsschenkel 126 in radialer Richtung nach innen auf den Rotor 10 zu.

Alle ersten Enden der Längsschenkel 126 - also die darstellungsgemäss unteren Enden - sind durch einen Rückschluss 122 zum Führen des magnetischen Flusses miteinander verbunden.

Die Spulenkerne 125 sind bezüglich der Umfangsrichtung um den Rotor 10 herum angeordnet sind, sodass der Rotor 10 zwischen den Querschenkeln 127 der Spulenkerne 125 angeordnet ist. An jedem Längsschenkel 126 ist mindestens eine konzentrierte Wicklung 160 vorgesehen, welche den jeweiligen Längsschenkel 126 umgibt.

Mit den konzentrierten Wicklungen 160 werden die für den magnetischen Antrieb und die magnetische Lagerung des Rotors 10 notwendigen elektromagnetischen Felder erzeugt. Mit diesen konzentrierten Wicklungen 160 werden im Betriebszustand also diejenigen elektromagnetischen Felder erzeugt, mit welchen in an sich bekannter Weise ein Drehmoment auf den Rotor 10 bewirkt wird, und mit welchen eine beliebig einstellbare Querkraft in radialer Richtung auf den Rotor 10 ausübbar ist, sodass die radiale Position des Rotors 10, also seine Position in der zur axialen Richtung A senkrechten radialen Ebene E, aktiv steuerbar bzw. regelbar ist. Bezüglich dreier weiterer Freiheitsgrade, nämlich seiner Position in axialer Richtung A und Verkippungen bezüglich der zur Solldrehachse senkrechten radialen Ebene E (zwei Freiheitsgrade), ist der Rotor 10 passiv magnetisch, das heisst nicht ansteuerbar, durch Reluktanzkräfte gelagert bzw. stabilisiert.

**Patentansprüche**

1. Pumpeneinheit für eine Zentrifugalpumpe, welche die Pumpeneinheit und einen Stator (100) umfasst, der sich in einer axialen Richtung (A) von einem ersten axialen Ende (110) bis zu einem zweiten axialen Ende (120) erstreckt, wobei an dem ersten axialen Ende (110) eine becherförmige Ausnehmung (121) vorgesehen ist, in welche die Pumpeneinheit (1) einsetzbar ist, wobei die Pumpeneinheit ein Pumpengehäuse (2) mit einem Einlass (21) und mit einem Auslass (22) für ein zu förderndes Fluid aufweist, sowie einen in dem Pumpengehäuse (2) angeordneten Rotor (10) zum Fördern des Fluids, der um die axiale Richtung (A) rotierbar ist, wobei die Pumpeneinheit für eine berührungslos magnetische Lagerung des Rotors (10) und für einen berührungslos magnetischen Antrieb des Rotors (10) durch den Stator (100) ausgestaltet ist, wobei das Pumpengehäuse (2) ein Deckelteil (4) und ein Bodenteil (3) zum Verschliessen des Deckelteils (4) aufweist, wobei das Bodenteil (3) einen zylindrischen Becher (31) zur Aufnahme des Rotors (10) aufweist, welcher in die becherförmige Ausnehmung (121) des Stators (100) einsetzbar ist, **dadurch gekennzeichnet, dass** sowohl der Einlass (21) als auch der Auslass (22) des Pumpengehäuses (2) am Deckelteil (4) angeordnet sind.

2. Pumpeneinheit nach Anspruch 1, wobei das Bodenteil (3) in das Deckelteil (4) einsetzbar ist, sodass das Deckelteil (4) radial aussenliegend das Bodenteil (3) umfasst.

3. Pumpeneinheit nach einem der vorangehenden Ansprüche, wobei das Deckelteil (4) aus einem metallischen Material, vorzugsweise aus einem Edelstahl, gefertigt ist.

4. Pumpeneinheit nach einem der vorangehenden Ansprüche, wobei ein Montagering (5) vorgesehen ist, auf welchem das Bodenteil (3) aufliegt, wobei der Montagering (5) an dem Deckelteil (4) fixierbar ist, derart, dass das Bodenteil (3) bezüglich der axialen Richtung (A) zwischen dem Montagering (5) und dem Deckelteil (4) eingeklemmt ist.

5. Pumpeneinheit nach einem der vorangehenden Ansprüche, wobei das Deckelteil (4) eine Mehrzahl von Befestigungsöffnungen (411) für Befestigungselemente (11) aufweist, mit denen die Pumpeneinheit an dem Stator (100) fixierbar ist, wobei die Befestigungsöffnungen (411) radial aussenliegend an dem Deckelteil (4) angeordnet sind.

6. Pumpeneinheit nach Anspruch 5, wobei zwischen zwei in Umfangsrichtung benachbarten Befestigungsöffnungen (411) eine radiale Ausnehmung (412) vorgesehen ist, derart, dass ein Aussendurchmesser des Deckelteils (3) an den Befestigungsöffnungen (411) grösser ist als an der dazwischen angeordneten radialen Ausnehmung (412).

7. Pumpeneinheit nach einem der Ansprüche 4-7, wobei in axialer Richtung (A) benachbart zu dem Deckelteil (4) ein Abdeckring (6) aus einem elektrisch schlecht leitenden Material vorgesehen ist, welcher so angeordnet ist, dass der Abdeckring (6) nach dem Einsetzen der Pumpeneinheit in den Stator bezüglich der axialen Richtung (A) zwischen den Befestigungsöffnungen (411) und dem Stator (100) angeordnet ist.

8. Pumpeneinheit nach einem der vorangehenden Ansprüche, wobei auf der inneren Oberfläche des Deckelteils (4) eine innere Auskleidung (44) vorgesehen ist, welche aus einem Kunststoff gefertigt ist.

9. Pumpeneinheit nach Anspruch 8, wobei auf der inneren Oberfläche des Deckelteils (4) Ankerstrukturen (45) vorgesehen sind, welche die Verbindung zwischen der inneren Auskleidung (44) und der inneren Oberfläche verbessern.

10. Pumpeneinheit nach einem der vorangehenden Ansprüche, wobei das Bodenteil (3) eine im Wesentlichen ringförmige erste Dichtfläche (91) aufweist, und das Deckelteil (4) eine im Wesentlichen ringförmige zweite Dichtfläche (92) zum Zusammenwirken mit der ersten Dichtfläche (91), wobei die erste Dichtfläche (91) und die zweite Dichtfläche (92) bezüglich der axialen Richtung (A) überlappen, sodass eine radiale Dichtung herstellbar ist.

11. Pumpeneinheit nach Anspruch 10, wobei eine der beiden Dichtflächen (91, 92) als Rippenfläche mit mindestens einer radialen Dichtungsrippe (97) ausgestaltet ist, die sich in Umfangsrichtung entlang der gesamten Dichtfläche (91, 92) erstreckt, während die andere der beiden Dichtflächen (92, 91) als glatte Fläche ausgestaltet ist.

12. Pumpeneinheit nach Anspruch 11, bei welcher ein radiales Verstärkungselement (98) vorgesehen ist, welches ringförmig ausgestaltet ist, und radial innenliegend bezüglich der beiden Dichtflächen (91, 92) angeordnet ist.

13. Pumpeneinheit nach Anspruch 12 und Anspruch 4, wobei das radiale Verstärkungselement (98) einstückig mit dem Montagering (5) ausgestaltet ist.

14. Zentrifugalpumpe zum Fördern eines Fluids mit einer Pumpeneinheit, die nach einem der vorangehenden Ansprüche ausgestaltet ist, und mit einem Stator (100), der sich in einer axialen Richtung (A) von einem ersten axialen Ende (110) bis zu einem zweiten axialen Ende (120) erstreckt, wobei an dem ersten axialen Ende (110) eine becherförmige Ausnehmung (121) vorgesehen ist, in welche der zylindrischen Becher (31) der Pumpeneinheit (1) einsetzbar ist, wobei der Stator (100) mit dem Rotor (10) einen elektromagnetischen Drehantrieb zum Rotieren des Rotors (10) um die axiale Richtung (A) bildet, wobei der Stator (100) als Lager- und Antriebsstator ausgestaltet ist, mit welchem der Rotor (10) berührungslos magnetisch antreibbar und berührungslos magnetisch bezüglich des Stators (100) lagerbar ist, wobei der Rotor (10) bezüglich der axialen Richtung (A) passiv magnetisch stabilisiert ist, und in einer zur axialen Richtung (A) senkrechten radialen Ebene (E) aktiv magnetisch gelagert ist.

15. Zentrifugalpumpe nach Anspruch 14, bei welchem der elektromagnetische Drehantrieb als Tempelmotor ausgestaltet ist, wobei der Stator (100) eine Mehrzahl von Spulenkernen (125) aufweist, von denen jeder einen Längsschenkel (126) umfasst, welcher sich von einem ersten Ende in axialer Richtung (A) bis zu einem zweiten Ende erstreckt, sowie einen Querschenkel (127), welcher an dem zweiten Ende des Längsschenkels (126) und in der radialen Ebene (E) angeordnet ist, und welcher sich von dem Längsschenkel (126) in radialer Richtung erstreckt, wobei die Spulenkerne (125) bezüglich der Umfangsrichtung um den Rotor (10) herum angeordnet sind, sodass der Rotor (10) zwischen den Querschenkeln (127) der Spulenkerne (125) angeordnet ist, und wobei an jedem Längsschenkel (125) mindestens eine konzentrierte Wicklung (160) vorgesehen ist, welche den jeweiligen Längsschenkel (126) umgibt.

Fig.1

Fig.2

Fig.3

11  11

A

21

4

41

22

1

411  411

2

90

103

10  102

2

3

Fig.4

A

4

21

22  103

1

2

22

41

11

11

411

3

101  102  10  31

90

**Fig.5**

**Fig.6**

Fig.7

Fig.8

Fig.9

22

44

4

411

413

Fig.10

411 413 220 45 4

22

45

45

Fig.11

53

A

11

4

22

1

412

411

413

413

412

6

61

61

90

10

3

5

Fig.12

A

4

53

1

22

200

6

11

413

3

121

110

100

130

120

Fig.13

Fig.14

Fig.14a

Fig.15

Fig.16

**Europäisches Patentamt**
**European Patent Office**
**Office européen des brevets**

# EUROPÄISCHER RECHERCHENBERICHT

**Nummer der Anmeldung**

EP 25 15 0417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 11 644 043 B2 (EUROSETS SRL [IT]) 9. Mai 2023 (2023-05-09) <br><br> * Spalte 2, Zeile 29 - Spalte 4, Zeile 54; Abbildungen 1-5 * <br> * Zusammenfassung * <br> - - - - - | 1-3, 5-10,14, 15 | INV. F04D13/06 F04D29/048 F04D29/08 F04D29/62 F04D29/42 |
| A | GB 2 134 991 A (BOSCH GMBH ROBERT) 22. August 1984 (1984-08-22) * Seite 1, Zeile 1 - Zeile 126; Abbildungen 1-2 * * Zusammenfassung * <br> - - - - - | 1-15 | |
| A | CN 116 637 293 A (NANJING HANKE MINGDE MEDICAL TECH CO LTD) 25. August 2023 (2023-08-25) * Absatz [0071] - Absatz [0113]; Abbildungen 1-20 * * Zusammenfassung * <br> - - - - - | 1-15 | |

**RECHERCHIERTE SACHGEBIETE (IPC)**

F04D

Der vorliegende Recherchenbericht wurde für alle Patentansprüche erstellt

| Recherchenort | Abschlußdatum der Recherche | Prüfer |
|---|---|---|
| Den Haag | 6. Mai 2025 | Hermens, Sjoerd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　EP 25 15 0417

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2025

| Im Recherchenbericht angeführtes Patentdokument | Datum der Veröffentlichung | Mitglied(er) der Patentfamilie | Datum der Veröffentlichung |
|---|---|---|---|
| US 11644043 B2 | 09-05-2023 | CA 3116641 A1 | 23-04-2020 |
| | | CN 112888862 A | 01-06-2021 |
| | | EP 3867534 A1 | 25-08-2021 |
| | | JP 2022502606 A | 11-01-2022 |
| | | US 2022025897 A1 | 27-01-2022 |
| | | WO 2020079602 A1 | 23-04-2020 |
| GB 2134991 A | 22-08-1984 | DE 3300889 A1 | 19-07-1984 |
| | | FR 2541389 A1 | 24-08-1984 |
| | | GB 2134991 A | 22-08-1984 |
| | | JP S59138797 A | 09-08-1984 |
| CN 116637293 A | 25-08-2023 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022004144 A